# EUROPEAN PATENT APPLICATION

(11) **EP 3 968 284 A1**
(43) Date of publication of application: **16.03.2022**
(21) Application number: 20884102.3
(22) Date of filing: 06.11.2020
(51) Int. Cl.: G06T 17/00

(54) **MODEL ACQUISITION METHOD, OBJECT PRE-DETERMINATION METHOD AND DEVICES**

(30) Priority: 08.11.2019 CN 201911090503; 02.12.2019 CN 201911216379
(71) Applicant: Huawei Technologies Co., Ltd., Shenzhen, Guangdong 518129 (CN)
(72) Inventor: WANG, Guoyi, Shenzhen, Guangdong 518129 (CN); CHEN, Bing, Shenzhen, Guangdong 518129 (CN); SUN, Wenchao, Shenzhen, Guangdong 518129 (CN); XU, Ziya, Shenzhen, Guangdong 518129 (CN)
(74) Representative: Epping - Hermann - Fischer
(86) International application number: PCT/CN2020/127004
(87) International publication number: WO 2021/088960

(57) **Abstract**

A model generation method and apparatus, and a model reconstruction method and apparatus are provided. The model generation method includes: obtaining a first image, where the first image is any one of a plurality of frames of images of a target object that are obtained by a camera; obtaining a pose of the first image based on the first image, where the pose of the first image is a pose that is of the target object and that exists when the first image is shot; obtaining accuracy of the pose of the first image; obtaining a corrected pose of the first image or a corrected pose of a second image when the accuracy does not satisfy an accuracy condition, where the second image is an image obtained later than the first image in the plurality of frames of images; and generating a first target model of the target object based on the corrected pose of the first image, or generating a second target model of the target object based on the corrected pose of the second image. According to the method, the target object can be uninterruptedly scanned and a point cloud model of the target object can be created. This improves accuracy of pose obtaining, and improves object reconstruction efficiency while ensuring an object reconstruction effect.

## Description

This application claims priority to Chinese Patent Application No. 201911090503.1, filed with the China National Intellectual Property Administration on November 8, 2019 and entitled "MODEL OBTAINING METHOD AND APPARATUS, AND OBJECT PREDETERMINING METHOD AND APPARATUS", and priority to Chinese Patent Application No. 201911216379.9, filed with the China National Intellectual Property Administration on December 2, 2019 and entitled "MODEL GENERATION METHOD AND APPARATUS, AND MODEL RECONSTRUCTION METHOD AND APPARATUS", which are incorporated herein by reference in their entireties.

### TECHNICAL FIELD

This application relates to computer technologies, and in particular, to a model generation method and apparatus, and a model reconstruction method and apparatus.

### BACKGROUND

Object reconstruction is widely used in the field of computer graphics and computer vision, for example, used in special effects of films, three-dimensional stereo image games, virtual reality, and human-computer interaction. With popularization of 3D cameras, there are more applications (Applications, APPs) related to object reconstruction. For example, a doll is scanned by using a camera on a terminal device, and the doll is reconstructed based on scanned image data, to obtain a point cloud model of the doll, so that the doll is reproduced and moved in an APP.

However, during scanning in the foregoing object reconstruction method, a user needs to hold an object by using a hand and continuously flip the object to enable the camera to obtain a complete image of the object. Once the camera fails to track the object, an effect and efficiency of object reconstruction are affected.

### SUMMARY

This application provides a model generation method and apparatus, and a model reconstruction method and apparatus, to uninterruptedly scan a target object and create a point cloud model of the target object. This improves accuracy of pose obtaining, and improves object reconstruction efficiency while ensuring an object reconstruction effect. According to a first aspect, this application provides a model generation method, including:
obtaining a first image, where the first image is any one of a plurality of frames of images of a target object that are obtained by a camera; obtaining a pose of the first image based on the first image, where the pose of the first image is a pose that is of the target object and that exists when the first image is shot; obtaining accuracy of the pose of the first image; obtaining a corrected pose of the first image or a corrected pose of a second image when the accuracy does not satisfy an accuracy condition, where the second image is an image obtained later than the first image in the plurality of frames of images; and generating a first target model of the target object based on the corrected pose of the first image, or generating a second target model of the target object based on the corrected pose of the second image.

In a process of obtaining an image of the target object by using the camera, if a tracking delay or a tracking failure occurs, a terminal device may correct a pose in a timely manner with reference to an obtained image, and generate a point cloud model of the target object through fusion by using an accurate pose. In this way, in scenarios such as a scenario in which the target object rotates excessively fast, slides down, or moves out of an image, scanning of the target object can be completed uninterruptedly. This improves accuracy of pose obtaining, and improves object reconstruction efficiency while ensuring an object reconstruction effect.

The obtaining a pose of the first image based on the first image may include: obtaining the pose of the first image based on a pattern of the target object on the first image.

In a possible implementation, the generating a second target model of the target object based on the corrected pose of the second image includes: generating the second target model of the target object based on the corrected pose of the second image, a first model, and a second model, where the first model is a point cloud model that is of the target object and that is generated based on a third image, the third image is an image in the plurality of frames of images that precedes the first image in an obtaining time order, and the second model is a point cloud model that is of the target object and that is generated based on the second image; and the generating a first target model of the target object based on the corrected pose of the first image includes: generating the first target model of the target object based on the corrected pose of the first image, a third model, and the first model, where the third model is a point cloud model that is of the target object and that is generated based on the first image.

A pose of the first model is known, and "according to the first model" may mean "according to the first model and the pose of the first model".

In a possible implementation, the first model is a point cloud model that is of the target object and that is generated based on at least two frames of images that are in the plurality of frames of images and obtained earlier than the first image and that include the third image; and/or the second model is a point cloud model that is of the target object and that is generated based on at least two frames of images from the first image to the second image in the obtaining time order in the plurality of frames of images.

In a possible implementation, the plurality of frames of images each include a depth map.

In a possible implementation, after the obtaining accuracy of the pose of the first image, the method further includes: generating a third target model of the target object based on the pose of the first image, the first image, and the first model when the accuracy satisfies the accuracy condition.

The third target model or a model generated based on the third target model may be further displayed.

In a process of obtaining an image of the target object by using the camera, if tracking is normal, the terminal device may generate a point cloud model of the target object through fusion by using an accurate pose. This improves accuracy of pose obtaining, and improves object reconstruction efficiency while ensuring an object reconstruction effect.

In a possible implementation, the plurality of frames of images each include a color map, and the obtaining a corrected pose of the first image includes: obtaining a fourth image, where the fourth image is a key image obtained earlier than the first image in the plurality of frames of images, and a color map included in the fourth image matches a color map included in the first image; calculating an initial pose of the first image based on the fourth image and the first image; and correcting the initial pose of the first image based on the first model and the third model to obtain the corrected pose of the first image, where the third model is the point cloud model that is of the target object and that is generated based on the first image.

The calculating an initial pose of the first image based on the fourth image and the first image may include: calculating the initial pose of the first image based on the fourth image, a pose of the fourth image, and the first image.

In a possible implementation, the calculating an initial pose of the first image based on the fourth image and the first image includes: determining, based on a location of a matched pixel in the color map included in the fourth image and a location of a matched pixel in the color map included in the first image, a target pixel in a depth map included in the fourth image and a target pixel in a depth map included in the first image; and calculating the initial pose of the first image based on the target pixel in the depth map included in the fourth image and the target pixel in the depth map included in the first image.

In a possible implementation, the plurality of frames of images each include a color map, and the obtaining a corrected pose of a second image includes: obtaining a fifth image, where the fifth image is a key image obtained earlier than the first image in the plurality of frames of images, and a color map included in the fifth image matches a color map included in the second image; calculating an initial pose of the second image based on the fifth image and the second image; and correcting the initial pose of the second image based on the first model and the second model to obtain the corrected pose of the second image, where the second model is the point cloud model that is of the target object and that is generated based on the second image.

The calculating an initial pose of the second image based on the fifth image and the second image may include: calculating the initial pose of the second image based on the fifth image, a pose of the fifth image, and the second image.

In a possible implementation, the calculating an initial pose of the second image based on the fifth image and the second image includes: determining, based on a location of a matched pixel in the color map included in the fifth image and a location of a matched pixel in the color map included in the second image, a target pixel in a depth map included in the fifth image and a target pixel in a depth map included in the second image; and calculating the initial pose of the second image based on the target pixel in the depth map included in the fifth image and the target pixel in the depth map included in the second image.

In a possible implementation, the obtaining a pose of the first image based on the first image includes: performing ICP calculation on the first image and the third image to obtain the pose of the first image, where the third image is the image in the plurality of frames of images that precedes the first image in the obtaining time order; or performing ICP calculation on the first image and a depth projection map obtained by projecting the first model based on a pose of the third image, to obtain the pose of the first image.

In a possible implementation, the accuracy of the pose includes: a percentage of a quantity of matching points corresponding to the ICP calculation, or a matching error corresponding to the ICP calculation; and that the accuracy does not satisfy the accuracy condition includes: the percentage of the quantity of matching points is less than a first threshold, or the matching error is greater than a second threshold.

The percentage of the quantity of matching points may be a percentage of the quantity of matching points in a total quantity of points used to indicate the target object in the first image, the third image, or the depth projection map. The percentage of the quantity of matching points may also be replaced with a proportion of the quantity of matching points.

In a possible implementation, the first image includes N consecutive frames of images.

In a possible implementation, before the obtaining a first image, the method further includes: obtaining a sixth image; determining a pattern of the target object on the sixth image; determining, based on the pattern of the target object on the sixth image, whether a three-dimensional model of the target object is reconstructible; and displaying first prompt information on a display when determining that the three-dimensional model of the target object is reconstructible, where the first prompt information is used to indicate that the three-dimensional model of the target object is reconstructible.

In a possible implementation, the first prompt information is used to prompt a user to move the camera, so that the target object is in a specified area of an image shot by the camera.

In a possible implementation, after the determining, based on the pattern of the target object on the sixth image, whether a three-dimensional model of the target object is reconstructible, the method further includes: displaying second prompt information on the display when determining that the three-dimensional model of the target object is non-reconstructible, where the second prompt information is used to indicate that the three-dimensional model of the target object is non-reconstructible.

When determining that the target object is unsuitable for reconstruction, the terminal device may display a related word on a screen, to remind the user that a point cloud model of the object is non-reconstructible. In this way, the user may stop a subsequent operation. This avoids a case in which the user repeatedly attempts scanning but an object reconstruction result cannot be provided.

In a possible implementation, the method further includes: displaying a selection control on the display; and receiving a first operation instruction, where the first operation instruction is an instruction generated based on an operation performed by the user on the selection control in the display interface, and the first operation instruction is used to instruct to reconstruct or not to reconstruct the three-dimensional model of the target object.

In a possible implementation, the determining a pattern of the target object on the sixth image includes: obtaining, based on the sixth image, a pattern that is of at least one object and that is included in the sixth image; displaying a mark of the pattern of the at least one object on the display; receiving a second operation instruction, where the second operation instruction is an instruction generated based on a selection operation performed on the mark, and the second operation instruction is used to indicate one pattern in the pattern of the at least one object; and determining, as the pattern of the target object according to the second operation instruction, the pattern that is of an object and that is selected by the user.

In a possible implementation, the determining a pattern of the target object on the sixth image includes: obtaining, based on the sixth image, a pattern that is of at least one object and that is included in the sixth image; and determining, as the pattern of the target object, a pattern whose weight satisfies a weight condition in the pattern of the at least one object.

In a possible implementation, the determining, based on the pattern of the target object on the sixth image, whether a three-dimensional model of the target object is reconstructible includes: determining a material or a texture of the target object based on the pattern of the target object on the sixth image; and when the material or the texture of the target object satisfies a reconstruction condition, determining that the three-dimensional model of the target object is reconstructible.

In a possible implementation, after the generating a first target model of the target object or generating a second target model of the target object, the method further includes: determining scanning integrity of the target object based on the first target model of the target object or the second target model of the target object; and when the scanning integrity reaches 100%, stopping obtaining an image of the target object by using the camera.

In a possible implementation, after the generating a first target model of the target object or generating a second target model of the target object, the method further includes: determining whether the first target model of the target object or the second target model of the target object has a newly added area relative to the first model; and when the first target model of the target object or the second target model of the target object has no newly added area relative to the first model, stopping obtaining an image of the target object by using the camera.

The integrity of scanning the target object by the terminal device may be indicated in a manner such as a number, a progress bar, or a 3D model. When the integrity of scanning the target object by the terminal device reaches 100%, the terminal device may display a related word on the screen, to prompt the user to end scanning. Alternatively, the terminal device may directly end scanning. In this way, a scanning progress is indicated in a display interface, so that the user conveniently determines a flip angle of the target object in a next step, and the user can be clearly prompted that the scanning ends, so that an unnecessary operation is avoided.

In a possible implementation, the method further includes: displaying the three-dimensional model of the target object, where the three-dimensional model is a model that is of the target object and that is generated based on the first target model of the target object or the second target model of the target object, or the three-dimensional model is the first target model or the second target model. According to a second aspect, this application provides a model reconstruction method, including:
obtaining a current image, where the current image is any one of a plurality of frames of images of a target object that are obtained by a camera; determining a pattern of the target object on the current image; determining, based on the pattern of the target object on the current image, whether a three-dimensional model of the target object is reconstructible; and displaying first prompt information on a display when determining that the three-dimensional model of the target object is reconstructible, where the first prompt information is used to indicate that the three-dimensional model of the target object is reconstructible.

In a possible implementation, the method further includes: obtaining a first image when the three-dimensional model of the target object is reconstructible, where the first image is an image obtained later than the current image in the plurality of frames of images; obtaining a pose of the first image based on the first image, where the pose of the first image is a pose that is of the target object and that exists when the first image is shot; obtaining accuracy of the pose of the first image; obtaining a corrected pose of the first image or a corrected pose of a second image when the accuracy does not satisfy an accuracy condition, where the second image is an image obtained later than the first image in the plurality of frames of images; and generating a first target model of the target object based on the corrected pose of the first image, or generating a second target model of the target object based on the corrected pose of the second image.

The first target model, the second target model, or a model generated based on the first target model or the second target model may be further displayed.

In a possible implementation, the method further includes: obtaining a first image when the three-dimensional model of the target object is reconstructible, where the first image is an image obtained later than the current image in the plurality of frames of images; obtaining a pose of the first image based on the first image, where the pose of the first image is a pose that is of the target object and that exists when the first image is shot; and generating a third target model of the target object based on the pose of the first image.

The third target model or a model generated based on the third target model may be further displayed.

In a possible implementation, the first prompt information is used to prompt a user to move the camera, so that the target object is in a specified area of an image shot by the camera.

In a possible implementation, after the determining, based on the pattern of the target object on the current image, whether a three-dimensional model of the target object is reconstructible, the method further includes: displaying second prompt information on the display when determining that the three-dimensional model of the target object is non-reconstructible, where the second prompt information is used to indicate that the three-dimensional model of the target object is non-reconstructible.

In a possible implementation, the method further includes: displaying a selection control on the display; and receiving a first operation instruction, where the first operation instruction is an instruction generated based on an operation performed by the user on the selection control in the display interface, and the first operation instruction is used to instruct to reconstruct or not to reconstruct the three-dimensional model of the target object.

In a possible implementation, the determining a pattern of the target object on the current image includes: obtaining, based on the current image, a pattern that is of at least one object and that is included in the current image; displaying a mark of the pattern of the at least one object on the display; receiving a second operation instruction, where the second operation instruction is an instruction generated based on a selection operation performed on the mark, and the second operation instruction is used to indicate one pattern in the pattern of the at least one object; and determining, as the pattern of the target object according to the second operation instruction, the pattern that is of an object and that is selected by the user.

In a possible implementation, the determining a pattern of the target object on the current image includes: obtaining, based on the current image, a pattern that is of at least one object and that is included in the current image; and determining, as the pattern of the target object, a pattern whose weight satisfies a weight condition in the pattern of the at least one object.

In a possible implementation, the determining, based on the pattern of the target object on the current image, whether a three-dimensional model of the target object is reconstructible includes: determining a material or a texture of the target object based on the pattern of the target object on the current image; and when the material or the texture of the target object satisfies a reconstruction condition, determining that the three-dimensional model of the target object is reconstructible.

According to a third aspect, this application provides an apparatus, including:
an obtaining module, configured to obtain a first image, where the first image is any one of a plurality of frames of images of a target object that are obtained by a camera; and a processing module, configured to: obtain a pose of the first image based on the first image, where the pose of the first image is a pose that is of the target object and that exists when the first image is shot; obtain accuracy of the pose of the first image; obtain a corrected pose of the first image or a corrected pose of a second image when the accuracy does not satisfy an accuracy condition, where the second image is an image obtained later than the first image in the plurality of frames of images; and generate a first target model of the target object based on the corrected pose of the first image, or generate a second target model of the target object based on the corrected pose of the second image.

In a possible implementation, the processing module is specifically configured to: generate the second target model of the target object based on the corrected pose of the second image, a first model, and a second model, where the first model is a point cloud model that is of the target object and that is generated based on a third image, the third image is an image in the plurality of frames of images that precedes the first image in an obtaining time order, and the second model is a point cloud model that is of the target object and that is generated based on the second image; and the generating a first target model of the target object based on the corrected pose of the first image includes: generating the first target model of the target object based on the corrected pose of the first image, a third model, and the first model, where the third model is a point cloud model that is of the target object and that is generated based on the first image.

In a possible implementation, the first model is a point cloud model that is of the target object and that is generated based on at least two frames of images that are in the plurality of frames of images and obtained earlier than the first image and that include the third image; and/or the second model is a point cloud model that is of the target object and that is generated based on at least two frames of images from the first image to the second image in the obtaining time order in the plurality of frames of images.

In a possible implementation, the plurality of frames of images each include a depth map.

In a possible implementation, the processing module is further configured to generate a third target model of the target object based on the pose of the first image, the first image, and the first model when the accuracy satisfies the accuracy condition.

In a possible implementation, the plurality of frames of images each include a color map, and the processing module is specifically configured to: obtain a fourth image, where the fourth image is a key image obtained earlier than the first image in the plurality of frames of images, and a color map included in the fourth image matches a color map included in the first image; calculate an initial pose of the first image based on the fourth image and the first image; and correct the initial pose of the first image based on the first model and the third model to obtain the corrected pose of the first image, where the third model is the point cloud model that is of the target object and that is generated based on the first image.

In a possible implementation, the processing module is specifically configured to: determine, based on a location of a matched pixel in the color map included in the fourth image and a location of a matched pixel in the color map included in the first image, a target pixel in a depth map included in the fourth image and a target pixel in a depth map included in the first image; and calculate the initial pose of the first image based on the target pixel in the depth map included in the fourth image and the target pixel in the depth map included in the first image.

In a possible implementation, the plurality of frames of images each include a color map, and the processing module is specifically configured to: obtain a fifth image, where the fifth image is a key image obtained earlier than the first image in the plurality of frames of images, and a color map included in the fifth image matches a color map included in the second image; calculate an initial pose of the second image based on the fifth image and the second image; and correct the initial pose of the second image based on the first model and the second model to obtain the corrected pose of the second image, where the second model is the point cloud model that is of the target object and that is generated based on the second image.

In a possible implementation, the processing module is specifically configured to: determine, based on a location of a matched pixel in the color map included in the fifth image and a location of a matched pixel in the color map included in the second image, a target pixel in a depth map included in the fifth image and a target pixel in a depth map included in the second image; and calculate the initial pose of the second image based on the target pixel in the depth map included in the fifth image and the target pixel in the depth map included in the second image.

In a possible implementation, the processing module is specifically configured to: perform ICP calculation on the first image and the third image to obtain the pose of the first image, where the third image is the image in the plurality of frames of images that precedes the first image in the obtaining time order; or perform ICP calculation on the first image and a depth projection map obtained by projecting the first model based on a pose of the third image, to obtain the pose of the first image.

In a possible implementation, the accuracy of the pose includes: a percentage of a quantity of matching points corresponding to the ICP calculation, or a matching error corresponding to the ICP calculation; and that the accuracy does not satisfy the accuracy condition includes: the percentage of the quantity of matching points is less than a first threshold, or the matching error is greater than a second threshold.

In a possible implementation, the first image includes N consecutive frames of images.

In a possible implementation, the obtaining module is further configured to obtain a sixth image; and the processing module is further configured to: determine a pattern of the target object on the sixth image; determine, based on the pattern of the target object on the sixth image, whether a three-dimensional model of the target object is reconstructible; and display first prompt information on a display when determining that the three-dimensional model of the target object is reconstructible, where the first prompt information is used to indicate that the three-dimensional model of the target object is reconstructible.

In a possible implementation, the first prompt information is used to prompt a user to move the camera, so that the target object is in a specified area of an image shot by the camera.

In a possible implementation, the processing module is further configured to display second prompt information on the display when determining that the three-dimensional model of the target object is non-reconstructible, where the second prompt information is used to indicate that the three-dimensional model of the target object is non-reconstructible.

In a possible implementation, the processing module is further configured to: display a selection control on the display; and receive a first operation instruction, where the first operation instruction is an instruction generated based on an operation performed by the user on the selection control in the display interface, and the first operation instruction is used to instruct to reconstruct or not to reconstruct the three-dimensional model of the target object.

In a possible implementation, the processing module is specifically configured to: obtain, based on the sixth image, a pattern that is of at least one object and that is included in the sixth image; display a mark of the pattern of the at least one object on the display; receive a second operation instruction, where the second operation instruction is an instruction generated based on a selection operation performed on the mark, and the second operation instruction is used to indicate one pattern in the pattern of the at least one object; and determine, as the pattern of the target object according to the second operation instruction, the pattern that is of an object and that is selected by the user.

In a possible implementation, the processing module is further configured to: determine scanning integrity of the target object based on the first target model of the target object or the second target model of the target object; and when the scanning integrity reaches 100%, stop obtaining an image of the target object by using the camera.

In a possible implementation, the processing module is further configured to: determine whether the first target model of the target object or the second target model of the target object has a newly added area relative to the first model; and when the first target model of the target object or the second target model of the target object has no newly added area relative to the first model, stop obtaining an image of the target object by using the camera.

In a possible implementation, the processing module is further configured to display the three-dimensional model of the target object, where the three-dimensional model is a model that is of the target object and that is generated based on the first target model of the target object or the second target model of the target object.

According to a fourth aspect, this application provides an apparatus, including:
an obtaining module, configured to obtain a current image, where the current image is any one of a plurality of frames of images of a target object that are obtained by a camera; and a processing module, configured to: determine a pattern of the target object on the current image; determine, based on the pattern of the target object on the current image, whether a three-dimensional model of the target object is reconstructible; and display first prompt information on a display when determining that the three-dimensional model of the target object is reconstructible, where the first prompt information is used to indicate that the three-dimensional model of the target object is reconstructible.

In a possible implementation, the first prompt information is used to prompt a user to move the camera, so that the target object is in a specified area of an image shot by the camera.

In a possible implementation, the processing module is further configured to display second prompt information on the display when determining that the three-dimensional model of the target object is non-reconstructible, where the second prompt information is used to indicate that the three-dimensional model of the target object is non-reconstructible.

In a possible implementation, the processing module is further configured to: display a selection control on the display; and receive a first operation instruction, where the first operation instruction is an instruction generated based on an operation performed by the user on the selection control in the display interface, and the first operation instruction is used to instruct to reconstruct or not to reconstruct the three-dimensional model of the target object.

In a possible implementation, the processing module is specifically configured to: obtain, based on the current image, a pattern that is of at least one object and that is included in the current image; display a mark of the pattern of the at least one object on the display; receive a second operation instruction, where the second operation instruction is an instruction generated based on a selection operation performed on the mark, and the second operation instruction is used to indicate one pattern in the pattern of the at least one object; and determine, as the pattern of the target object according to the second operation instruction, the pattern that is of an object and that is selected by the user.

In a possible implementation, the obtaining module is further configured to obtain a first image when the three-dimensional model of the target object is reconstructible, where the first image is an image obtained later than the current image in the plurality of frames of images; and the processing module is further configured to: obtain a pose of the first image based on the first image, where the pose of the first image is a pose that is of the target object and that exists when the first image is shot; obtain accuracy of the pose of the first image; obtain a corrected pose of the first image or a corrected pose of a second image when the accuracy does not satisfy an accuracy condition, where the second image is an image obtained later than the first image in the plurality of frames of images; and generate a first target model of the target object based on the corrected pose of the first image, or generate a second target model of the target object based on the corrected pose of the second image.

According to a fifth aspect, this application provides a terminal device, including:
one or more processors; and
a memory, configured to store one or more programs.

When the one or more programs are executed by the one or more processors, the one or more processors are enabled to implement the method according to any one of the first aspect and the second aspect.

According to a sixth aspect, this application provides a computer-readable storage medium, including a computer program. When the computer program is executed on a computer, the computer is enabled to perform the method according to any one of the first aspect and the second aspect.

According to a seventh aspect, this application provides a computer program. When being executed by a computer, the computer program is used to perform the method according to any one of the first aspect and the second aspect.

### BRIEF DESCRIPTION OF DRAWINGS

FIG. 1 is an example of a schematic diagram depicting a structure of a mobile phone 100;
FIG. 2 is a flowchart depicting an embodiment of a model generation method according to this application;
FIG. 3 to FIG. 5 show examples of display interfaces in a process in which a terminal device obtains an image of a target object by using a camera;
FIG. 6 and FIG. 7 are examples of schematic diagrams of selecting a target object by a user;
FIG. 8 shows an example of a prompt interface of a terminal device;
FIG. 9 and FIG. 10 are examples of schematic diagrams in which a terminal device guides a user to adjust a location of a target object;
FIG. 11 and FIG. 12 show examples of integrity prompt interfaces of a terminal device;
FIG. 13 is a block flowchart depicting an object reconstruction process;
FIG. 14 is a flowchart depicting an embodiment of a model reconstruction method according to this application;
FIG. 15 is a schematic diagram depicting a structure of an apparatus according to an embodiment of this application; and
FIG. 16 is a schematic diagram depicting a structure of a terminal device according to this application.

### DESCRIPTION OF EMBODIMENTS

To make the objectives, technical solutions, and advantages of this application clearer, the following clearly and completely describes the technical solutions in this application with reference to the accompanying drawings in this application. It is clear that the described embodiments are merely some rather than all of the embodiments of this application. All other embodiments obtained by a person of ordinary skill in the art based on the embodiments of this application without creative efforts shall fall within the protection scope of this application.

In the embodiments, claims, and the accompanying drawings of the specification in this application, terms such as "first" and "second" are merely used for distinction and description, and should not be understood as an indication or implication of relative importance, or as an indication or implication of an order. In addition, terms "including" and "having" and any variants thereof are intended to cover non-exclusive inclusion, for example, include a series of steps or units. A method, system, product, or device is not necessarily limited to those steps or units that are expressly listed, but may include other steps or units that are not expressly listed or inherent to such a process, method, product, or device.

It should be understood that, in this application, "at least one" means one or more, and "a plurality of' means two or more. The term "and/or" is used to describe an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including a single item (piece) or any combination of a plurality of items (pieces). For example, at least one (piece) of a, b, or c may represent a, b, c, "a and b", "a and c", "b and c", or "a, b, and c", where a, b, and c may be singular or plural.

A model generation method provided in this application is applicable to an application scenario of object reconstruction. In an object reconstruction process, a user first scans a target object by using a camera on a terminal device, to obtain omnidirectional image data of the target object, and then the terminal device performs object reconstruction based on the image data, to generate a 3D model of the target object. The terminal device may be a mobile phone (mobile phone), a tablet computer (pad), a computer with wireless receiving and sending functions, a virtual reality (virtual reality, VR) device, an augmented reality (augmented reality, AR) device, a wireless device in industrial control (industrial control), a wireless device in self driving (self driving), a wireless device in telemedicine (remote medical), a wireless device in a smart grid (smart grid), a wireless device in transportation safety (transportation safety), a wireless device in a smart city (smart city), a wireless device in a smart home (smart home), or the like. This is not limited in the embodiments of this application.

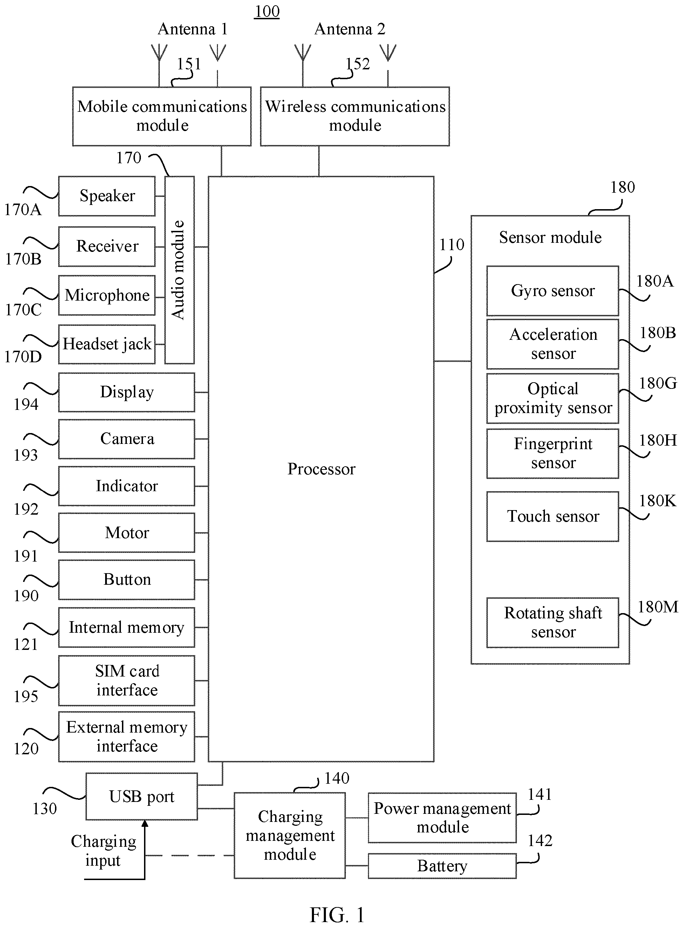

For example, the terminal device is a mobile phone. FIG. 1 is an example of a schematic diagram depicting a structure of a mobile phone 100.

The mobile phone 100 may include a processor 110, an external memory interface 120, an internal memory 121, a USB port 130, a charging management module 140, a power management module 141, a battery 142, an antenna 1, an antenna 2, a mobile communications module 151, a wireless communications module 152, an audio module 170, a speaker 170A, a receiver 170B, a microphone 170C, a headset jack 170D, a sensor module 180, a button 190, a motor 191, an indicator 192, a camera 193, a display 194, a SIM card interface 195, and the like. The sensor module 180 may include a gyro sensor 180A, an acceleration sensor 180B, an optical proximity sensor 180G, a fingerprint sensor 180H, a touch sensor 180K, and a rotating shaft sensor 180M (certainly, the mobile phone 100 may further include another sensor, for example, a temperature sensor, a pressure sensor, a distance sensor, a magnetic sensor, an ambient light sensor, a barometric pressure sensor, or a bone conduction sensor, which is not shown in the figure).

It may be understood that the structure shown in this embodiment of this application does not constitute a specific limitation on the mobile phone 100. In some other embodiments of this application, the mobile phone 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors. The controller may be a nerve center and a command center of the mobile phone 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, so that system efficiency is improved.

When different devices are integrated into the processor 110, for example, a CPU and a GPU are integrated, the CPU and the GPU may cooperate to perform a method provided in the embodiments of this application. For example, in the method, some algorithms are performed by the CPU, and the other algorithms are performed by the GPU, to achieve relatively high processing efficiency.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the mobile phone 100 may include one or N displays 194, where N is a positive integer greater than 1. The camera 193 (a front-facing camera, a rear-facing camera, or a camera that may serve as both a front-facing camera and a rear-facing camera) is configured to capture a static image or a video. Usually, the camera 193 may include photosensitive elements such as a lens group and an image sensor. The lens group includes a plurality of lenses (convex lenses or concave lenses), and is configured to: collect an optical signal reflected by a to-be-photographed object, and transfer the collected optical signal to the image sensor. The image sensor generates an original image of the to-be-photographed object based on the optical signal.

The internal memory 121 may be configured to store computer-executable program code. The executable program code includes instructions. The processor 110 runs the instructions stored in the internal memory 121, to perform various function applications and signal processing of the mobile phone 100. The internal memory 121 may include a program storage area and a data storage area. The program storage area may store code of an operating system, an application (for example, a camera application or WeChat), and the like. The data storage area may store data (for example, an image or a video collected by a camera application) created during use of the mobile phone 100, and the like.

In addition, the internal memory 121 may include a high-speed random access memory, or may include a nonvolatile memory, for example, at least one magnetic disk storage device, a flash memory, or a universal flash storage (universal flash storage, UFS).

Certainly, code of the method provided in the embodiments of this application may alternatively be stored in an external memory. In this case, the processor 110 may run, through the external memory interface 120, the code stored in the external memory.

The following describes functions of the sensor module 180.

The gyro sensor 180A may be configured to determine a motion posture of the mobile phone 100. In some embodiments, angular velocities of the mobile phone 100 around three axes (namely, axes x, y, and z) may be determined by using the gyro sensor 180A. In other words, the gyro sensor 180A may be configured to detect a current motion status of the mobile phone 100, for example, a shaken or static state.

The acceleration sensor 180B may detect magnitude of acceleration of the mobile phone 100 in various directions (usually on three axes). In other words, the gyro sensor 180A may be configured to detect a current motion status of the mobile phone 100, for example, a shaken or static state.

For example, the optical proximity sensor 180G may include a light-emitting diode (LED) and an optical detector, for example, a photodiode. The light-emitting diode may be an infrared light-emitting diode. The mobile phone emits infrared light by using the light-emitting diode. The mobile phone detects infrared reflected light from a nearby object by using the photodiode. When sufficient reflected light is detected, the mobile phone may determine that there is an object near the mobile phone. When insufficient reflected light is detected, the mobile phone may determine that there is no object near the mobile phone.

The gyro sensor 180A (or the acceleration sensor 180B) may send detected motion status information (for example, the angular velocity) to the processor 110. The processor 110 determines, based on the motion status information, whether the mobile phone is currently in a handheld state or a tripod state (for example, when the angular velocity is not 0, it indicates that the mobile phone 100 is in the handheld state).

The fingerprint sensor 180H is configured to collect a fingerprint. The mobile phone 100 may use a feature of the collected fingerprint to implement fingerprint-based unlocking, application lock access, fingerprint-based photographing, fingerprint-based call answering, and the like.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor, to determine a type of a touch event. The display 194 may provide visual output related to the touch operation. In some other embodiments, the touch sensor 180K may alternatively be disposed on a surface of the mobile phone 100 and is at a location different from that of the display 194.

For example, the display 194 of the mobile phone 100 displays a home screen, and the home screen includes icons of a plurality of applications (for example, a camera application and WeChat). A user taps an icon of the camera application on the home screen by using the touch sensor 180K, to trigger the processor 110 to start the camera application to enable the camera 193. The display 194 displays an interface of the camera application, for example, a viewfinder interface.

A wireless communication function of the mobile phone 100 may be implemented through the antenna 1, the antenna 2, the mobile communications module 151, the wireless communications module 152, a modem processor, a baseband processor, and the like.

The antenna 1 and the antenna 2 are configured to transmit and receive electromagnetic wave signals. Each antenna in the mobile phone 100 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communications module 151 may provide a wireless communication solution that includes 2G/3G/4G/5G or the like and that is applied to the mobile phone 100. The mobile communications module 151 may include at least one filter, a switch, a power amplifier, a low noise amplifier (low noise amplifier, LNA), and the like. The mobile communications module 151 may receive an electromagnetic wave through the antenna 1, perform processing such as filtering and amplification on the received electromagnetic wave, and transmit the electromagnetic wave to the modem processor for demodulation. The mobile communications module 151 may further amplify a signal modulated by the modem processor, and convert the signal into an electromagnetic wave for radiation through the antenna 1. In some embodiments, at least some functional modules of the mobile communications module 151 may be disposed in the processor 110. In some embodiments, at least some functional modules of the mobile communications module 151 and at least some modules of the processor 110 may be disposed in a same device.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transfers the low-frequency baseband signal obtained through demodulation to the baseband processor for processing. The baseband processor processes the low-frequency baseband signal, and then transfers a processed signal to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communications module 151 or another functional module.

The wireless communications module 152 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like and that is applied to the mobile phone 100. The wireless communications module 152 may be one or more devices integrating at least one communications processing module. The wireless communications module 152 receives an electromagnetic wave through the antenna 2, performs frequency modulation and filtering processing on an electromagnetic wave signal, and sends a processed signal to the processor 110. The wireless communications module 152 may further receive a to-be-sent signal from the processor 110, perform frequency modulation and amplification on the signal, and convert the signal into an electromagnetic wave for radiation through the antenna 2.

In some embodiments, the antenna 1 and the mobile communications module 151 in the mobile phone 100 are coupled, and the antenna 2 and the wireless communications module 152 in the mobile phone 100 are coupled, so that the mobile phone 100 can communicate with a network and another device through a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In addition, the mobile phone 100 may implement an audio function, for example, music playback or recording, by using the audio module 170, the speaker 170A, the receiver 170B, the microphone 170C, the headset jack 170D, the application processor, and the like. The mobile phone 100 may receive an input of the button 190, and generate a button signal input related to a user setting and function control of the mobile phone 100. The mobile phone 100 may generate a vibration prompt (for example, an incoming call vibration prompt) by using the motor 191. The indicator 192 in the mobile phone 100 may be an indicator light, and may be configured to indicate a charging status and a power change, or may be configured to indicate a message, a missed call, a notification, and the like. The SIM card interface 195 in the mobile phone 100 is configured to connect to a SIM card. The SIM card may be inserted into the SIM card interface 195 or detached from the SIM card interface 195, to implement contact with or detachment from the mobile phone 100.

It should be understood that, in actual application, the mobile phone 100 may include more or fewer components than those shown in FIG. 1. This is not limited in the embodiments of this application.

The following first illustrates some terms used in the embodiments of this application.

A first image is any one of a plurality of frames of images of a target object that are obtained by a camera.

A second image is an image obtained later than the first image in the plurality of frames of images.

A third image is an image in the plurality of frames of images that precedes the first image in an obtaining time order, and is usually a previous image of the first image.

A fourth image, a fifth image, and a sixth image are key images obtained earlier than the first image in the plurality of frames of images. The fourth image, the fifth image, and the sixth image are different images, or two of the fourth image, the fifth image, and the sixth image are a same image, or the fourth image, the fifth image, and the sixth image are all a same image.

A first model is a point cloud model that is of the target object and that is generated based on the third image. Further, the first model is a point cloud model that is of the target object and that is generated based on at least two frames of images that are in the plurality of frames of images and obtained earlier than the first image and that include the third image.

A second model is a point cloud model that is of the target object and that is generated based on the second image. Further, the second model is a point cloud model that is of the target object and that is generated based on at least two frames of images from the first image to the second image in the obtaining time order in the plurality of frames of images.

A third model is a point cloud model that is of the target object and that is generated based on the first image. Further, the third model is a point cloud model that is of the target object and that is generated based on the first image and a zero pose. The zero pose means that a pose of the first image is temporarily assumed to be zero in a generation process of the third model.

It should be noted that "first", "second", and the like in the foregoing terms are merely used for distinction and description, and should not be understood as an indication or implication of relative importance, or as an indication or implication of an order. In addition, terms for a same explanation or similar explanations are not limited to the foregoing names. This is not specifically limited in this application.

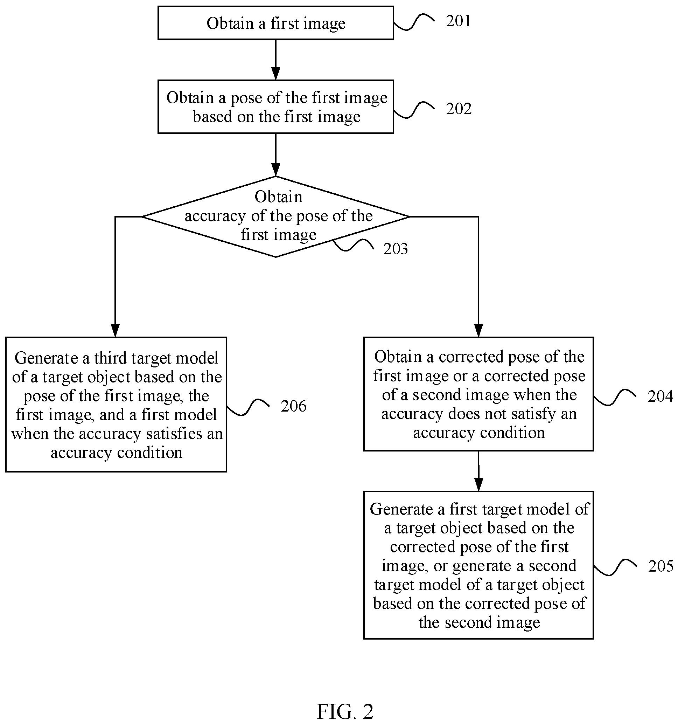

FIG. 2 is a flowchart depicting an embodiment of a model generation method according to this application. As shown in FIG. 2, the method in this embodiment may be performed by the terminal device (for example, the mobile phone 100) in the foregoing embodiment. The model generation method may include the following steps.

Step 201: Obtain a first image.

A user opens a rear-facing camera of the terminal device, holds a target object with one hand, holds the terminal device with the other hand, and places the target object within a shooting range of the camera. In this application, the user is not limited to a person, but may further include any creature or device that operates the terminal device. In a process of obtaining an image of the target object by using the camera, the target object is fixedly placed at a location, and the user moves the terminal device to photograph the target object from different angles, to obtain a plurality of frames of images. The plurality of frames of images record appearances of the target object that are captured by the terminal device at various angles. Alternatively, in a process of obtaining an image of the target object by using the camera, the user continuously flips the target object, and at the same time, the camera captures an image of the target object, to obtain a plurality of frames of images. The plurality of frames of images record appearances of the target object at various angles in a process of flipping the target object.

The terminal device may perform the following processing each time the terminal device captures a frame of image. In other words, the first image is each of the foregoing plurality of frames of images. Alternatively, the terminal device may perform the following processing only after capturing a specific frame of image (for example, a key image). In other words, the first image is each frame of key image in the foregoing plurality of frames of images. Alternatively, the terminal device may periodically perform the following processing on a captured image. In other words, the first image is an image captured at a fixed time interval in the foregoing plurality of frames of images. This is not specifically limited in this application.

The key image is a subset of the plurality of frames of images. Usually, the key image may be extracted from an original image sequence based on spatial location distribution of frames (for example, when a frame spacing between a current image and a previous frame of key image is greater than a specific spacing, the current image is selected as a key image), or may be extracted from an original image sequence based on a time interval (for example, for a 30-frames-per-second image sequence, one frame is selected as a key image every 15 frames (that is, 0.5 second)). Alternatively, all image sequences may be used as key images. This is not specifically limited in this application.

Each of the foregoing plurality of frames of images may include a color map and a time of flight (time of flight, ToF) depth map. The color map is used to represent reflected light information that is of an object and that is obtained by the camera, and the reflected light information includes information such as a shape, a texture, and a reflected light feature of the object. The ToF depth map is used to represent a distance between the terminal device and the object, that is, a depth that is usually referred to. The distance is a product of duration from a moment at which a built-in infrared emission apparatus of the terminal device emits an infrared ray to a moment at which the infrared ray reaches an infrared receiving apparatus after being reflected by the object and a speed of the infrared ray.

Step 202: Obtain a pose of the first image based on the first image.

The term "pose" includes a location and a posture. If the target object moves on a plane, a location of the target object may be described by using two-dimensional (2D) coordinates, and a posture of the target object may be described by using a rotation angle θ. If the target object moves in three-dimensional space, a location of the target object may be described by using three-dimensional (3D) coordinates, and a posture of the target object may be described in a plurality of manners. For example, common manners include an Euler angle, a quaternion, and a rotation matrix. By virtue of the location and the posture, a coordinate system can be built. Further, a transform relationship between coordinate systems can be described. For example, which point in a world coordinate system (for example, a map) corresponds to the target object in the image shot by the camera is to be determined. In this case, a coordinate value of the target object for a camera coordinate system needs to be first obtained, and then converted to a coordinate value in the world coordinate system based on a pose of the camera. In computer vision, the pose is a relative relationship that reflects a transform relationship between the target object and the camera (that is, the terminal device). When the camera photographs the target object, a pose relationship between the camera and the target object may be described in a plurality of manners: (1) a terminal device pose: which usually means a pose of the terminal device relative to the target object (or a world in which the target object is located); and (2) an object pose: which usually means a pose of the target object presented in the camera. It can be learned that the pose of the first image refers to a location and a posture presented by a pattern of the target object in the first image obtained by photographing the target object by the camera. If the target object does not move, and the terminal device moves, the pose of the first image presents the terminal device pose. If the target object moves, and the terminal device does not move, the pose of the first image presents the object pose. The two poses are essentially the same, and both present a pose relationship between the camera of the terminal device and the target object.

It should be noted that a pose of an image may also be understood as a pose that is of an object and that exists when the image is shot, a pose of a model of an object, or a pose of a terminal.

Optionally, the terminal device may perform iterative closest point (iterative closest point, ICP) calculation on the first image and a third image to obtain the pose of the first image.

Optionally, the terminal device may project a first model based on a pose of the third image to obtain a depth projection map, and perform ICP calculation on the first image and the depth projection map to obtain the pose of the first image. A matching object in the ICP calculation refers to a point cloud model. Performing ICP calculation on the two frames of images means that after ToF depth maps included in the two frames of images are separately converted into point cloud models, ICP calculation is performed on the two point cloud models.

Optionally, the terminal device may first remove a depth value corresponding to a non-target object in the first image by using a mask method. Specifically, based on a color map and a ToF depth map included in the first image, the terminal device removes a maximum plane in the ToF depth map to generate a mask maskA. The maximum plane is a maximum plane detected in the ToF depth map by using a plane detection algorithm. A mask maskB is generated based on a projection, on the maximum plane, of a point cloud model that is of the target object and that is generated based on the first image and an image obtained earlier than the first image. The maskB is expanded through a morphological operation to enable the maskB to accept some new content. An expansion reason is that the point cloud model of the target object gradually increases in a process of obtaining an image of the target object by using the camera. The mask is expanded, so that a new part obtained through scanning can be added to the point cloud model. The terminal device calculates an intersection of the maskA and the expanded maskB, and uses the intersection as an object mask. The depth value of the non-target object in the ToF depth map is removed based on the object mask, so that a processed ToF depth map can be obtained. The terminal device projects the point cloud model of the target object onto the camera, which is equivalent to photographing the generated point cloud model by using the camera, to obtain a projection image of the point cloud model. Finally, the terminal device performs ICP calculation by using the processed ToF depth map and the projection image of the point cloud model, to obtain the pose of the first image. Optionally, the terminal device may obtain the pose of the first image based on the first image by using a neural network. The neural network has been trained in advance, and can predict a pose of a pattern that is of the target object and that is included in the first image.

Optionally, the terminal device may calculate the pose of the first image by using a method based on visual odometry (visual odometry) or a variant thereof.

It should be noted that, in this application, another method may alternatively be used to obtain the pose of the first image. This is not specifically limited in this application.

Step 203: Obtain accuracy of the pose of the first image.

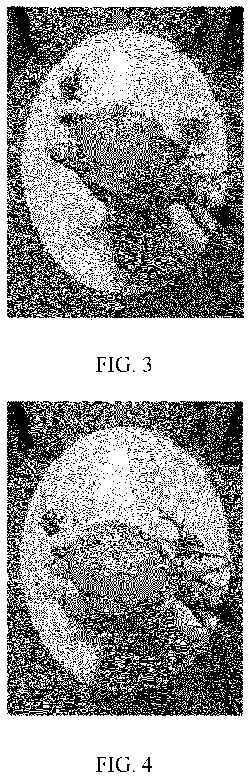

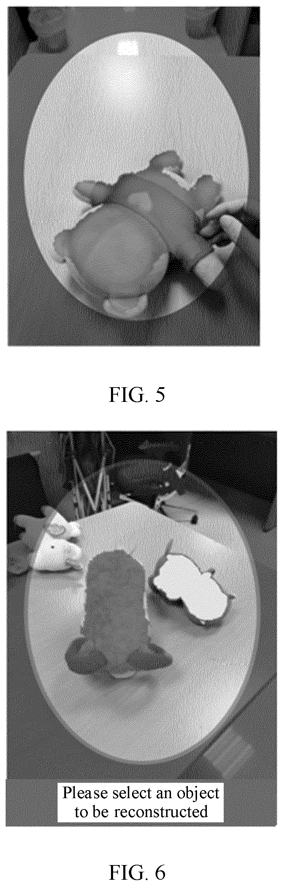

After obtaining the pose of the first image, the terminal device may generate a latest point cloud model of the target object based on the pose of the first image, the ToF depth map included in the first image, and the first model. Both the latest point cloud model and an actual image that is captured by the camera and that includes the target object are displayed on a screen. If the terminal device can track a flipping or translation process of the target object, or can track the target object in a moving process of the terminal device, the latest point cloud model displayed on the screen and the target object in the actual image may basically overlap, as shown in FIG. 3. If there is a delay when the terminal device tracks a flipping or translation process of the target object, or the terminal device cannot track the target object in a moving process of the terminal device, the latest point cloud model displayed on the screen may lag behind relative to the target object in the actual image. To be specific, the target object has been flipped to a next state by the user, but the latest point cloud model may still stay in a previous state of the target object, as shown in FIG. 4. If the terminal device fails to track the target object, the target object in the actual image displayed on the screen may have been flipped a plurality of times, but the latest point cloud model stays on a previous pose of the target object, as shown in FIG. 5.

As described above, if the point cloud model that is of the target object and that is obtained based on the first image shows that a tracking delay or a tracking failure occurs, the pose of the first image that is obtained based on the first image may not be completely consistent with an actual pose of the target object, and the pose of the first image is inaccurate. To determine the accuracy of the pose of the first image, the terminal device actually needs to determine whether a tracking delay or a tracking failure occurs.

Optionally, the accuracy of the pose includes: a percentage of a quantity of matching points corresponding to the ICP calculation when the pose of the first image is obtained, or a matching error corresponding to the ICP calculation. That the accuracy does not satisfy an accuracy condition includes: The percentage of the quantity of matching points is less than a first threshold, or the matching error is greater than a second threshold. Further, percentages of quantities of matching points of N consecutive frames of images are all less than the first threshold, or matching errors are all greater than the second threshold.

The percentage of the quantity of matching points is a percentage of a quantity of matching points of color maps included in two frames of images to a quantity of valid pixels in a ToF depth map (obtained in step 202), or a percentage of a quantity of matching points of color maps included in two frames of images to a quantity of valid pixels in a projection image of the first model on the camera.

Optionally, in a process in which the terminal device predicts the first image by using the neural network to obtain the pose of the first image, the terminal device may obtain a percentage that is of the accuracy of the pose of the first image and that is output by the neural network. When the percentage of the accuracy of the pose of the first image is less than a fourth threshold, it is determined that there is a delay in tracking the target object. Alternatively, when percentages of accuracy of poses of N consecutive frames of images are all less than a fourth threshold, it is determined that a tracking failure occurs.

Optionally, the terminal device may obtain some error information during the ICP calculation when the pose of the first image is obtained, and the error information includes the quantity of matching points, the matching error, and the like. The terminal device may determine the accuracy of the pose based on the error information by using a support vector machine (support vector machine) algorithm.

It should be noted that in this application, the accuracy of the pose may alternatively be determined by using another method. This is not specifically limited in this application.

If the accuracy does not satisfy the accuracy condition, skip to step 204. If the accuracy satisfies the accuracy condition, skip to step 206.

Step 204: Obtain a corrected pose of the first image or a corrected pose of a second image when the accuracy does not satisfy the accuracy condition.

Optionally, the obtaining a corrected pose of the first image may include: obtaining a fourth image, where a color map included in the fourth image matches the color map included in the first image; calculating an initial pose of the first image based on the fourth image and the first image; and correcting the initial pose of the first image based on the first model and a third model to obtain the corrected pose of the first image. The calculating an initial pose of the first image includes: determining, based on a location of a matched pixel in the color map included in the fourth image and a location of a matched pixel in the color map included in the first image, a target pixel in a depth map included in the fourth image and a target pixel in a depth map included in the first image; and calculating the initial pose of the first image based on the target pixel in the depth map included in the fourth image and the target pixel in the depth map included in the first image.

Optionally, the obtaining a corrected pose of a second image includes: obtaining a fifth image, where a color map included in the fifth image matches a color map included in the second image; calculating an initial pose of the second image based on the fifth image and the second image; and correcting the initial pose of the second image based on the first model and a second model to obtain the corrected pose of the second image. The calculating an initial pose of the second image includes: determining, based on a location of a matched pixel in the color map included in the fifth image and a location of a matched pixel in the color map included in the second image, a target pixel in a depth map included in the fifth image and a target pixel in a depth map included in the second image; and calculating the initial pose of the second image based on the target pixel in the depth map included in the fifth image and the target pixel in the depth map included in the second image.

When the accuracy of the pose of the first image does not satisfy the accuracy condition, the terminal device performs, frame by frame from the first image in an obtaining time order, matching on a 2D feature point in a color map included in an image and a 2D feature point in a color map included in a key image obtained earlier than the first image. Matching may mean that 2D feature points in color maps included in two frames of images are consistent or the closest. If the fourth image that matches the first image can be found for the first image, a subsequent image does not need to be compared. If the fourth image that matches the first image is not found for the first image, the terminal device needs to obtain an image that is of the target object and that is captured by the camera at a time point after the camera captures the first image, and perform matching by using a color map included in the image captured after the first image and the color map included in the key image obtained earlier than the first image, until the second image and the fifth image are found. That the terminal device obtains the image that is of the target object and that is captured by the camera at the time point after the camera captures the first image may be that the terminal device directly reads an image that has been captured by the camera before and that is stored in a memory, or may be that the terminal device controls the camera to capture an image in real time. This is not specifically limited.

The calculation of the initial pose includes: first finding locations that are of matched pixels of two frames of matched images and that are in the images based on color maps included in the images, then determining, based on the locations of the matched pixels, target pixels in ToF depth maps included in the images, and finally calculating the initial pose based on the target pixels in the ToF depth maps included in the two frames of matched images. If it is determined that the first image matches the fourth image, the initial pose of the first image is calculated based on the first image and the fourth image. In this case, the initial pose of the first image is corrected based on the first model and the third model to obtain the corrected pose of the first image. If it is determined that the second image matches the fifth image, the initial pose of the second image is calculated based on the second image and the fifth image. In this case, the initial pose of the second image is corrected based on the first model and the second model to obtain the corrected pose of the second image. For the second case, because there may be two or more frames of images from the first image to the second image, after the corrected pose of the second image is obtained, a corrected pose of a previous frame of image may be obtained based on a relative relationship between the corrected pose of the second image and a pose of the previous frame of image, then a corrected pose of a previous frame of image of the previous frame of image is obtained based on a relative relationship between the corrected pose of the previous frame of image and a pose of the previous frame of image of the previous frame of image, and so on, until the corrected pose of the first image is obtained. The terminal device may adjust the third model based on corrected poses from the first image to the second image, to obtain a corrected pose-based point cloud model of the target object.

Optionally, when the accuracy does not satisfy the accuracy condition, if the first image is marked as a key image, the terminal device may record pose feature information of the first image. The pose feature information may include image description information. The image description information may include a 2D feature point, a 3D feature point, and the like of the first image. The image description information may further include image data and the pose of the first image. A purpose of recording related information of the first image is that when the accuracy of the pose of the image does not satisfy the accuracy condition subsequently, the pose of the image may be corrected based on previously recorded related information of a previous key image.

Optionally, after obtaining the initial pose, the terminal device may correct the initial pose by using a bundle adjustment (Bundle Adjustment) algorithm that is not based on a dense model, to obtain the corrected pose.

It should be noted that, in this application, another method may alternatively be used to obtain the corrected pose of the image. This is not specifically limited in this application.

Step 205: Generate a first target model of the target object based on the corrected pose of the first image, or generate a second target model of the target object based on the corrected pose of the second image.

Optionally, the generating a first target model of the target object based on the corrected pose of the first image includes: generating the first target model of the target object based on the corrected pose of the first image, the third model, and the first model.

As described above, based on a pose association relationship in an image sequence, the corrected pose of the first image may reflect a relative relationship between the corrected pose of the first image and a pose of the fourth image. There is also a known relative relationship between the pose of the fourth image and a pose of the third image. Further, a relative relationship between the corrected pose of the first image and the pose of the third image may be obtained. Based on the relative relationship, an association relationship between the first model and the third model may be established, so that the first model and the third model may be fused to obtain the first target model of the target object. Optionally, the generating a second target model of the target object based on the corrected pose of the second image includes: generating the second target model of the target object based on the corrected pose of the second image, the first model, and the second model.

Likewise, there is also a known relative relationship between the corrected pose of the second image and the corrected pose of the first image. After the corrected pose of the second image is obtained, corrected poses of at least two frames of images from the second image to the first image may be obtained frame by frame. Further, an association relationship between the first model and the second model may be established, so that the first model and the second model may be fused to obtain the second target model of the target object.

Step 206: Generate a third target model of the target object based on the pose of the first image, the first image, and the first model when the accuracy satisfies the accuracy condition.

If the accuracy of the pose of the first image satisfies the accuracy condition, the terminal device may directly expand the first model based on a relative relationship between the pose of the first image and a pose of the third image with reference to the depth map included in the first image, to obtain the third target model of the target object. Optionally, if a tracking delay or a tracking failure occurs, the terminal device does not need to display an interface shown in FIG. 4 or FIG. 5 on the screen, but may simultaneously display an actual image that includes the target object and that is captured by the camera and the first target model or the second target model on the screen after obtaining the corrected pose of the first image or the second image in step 204. In other words, even if the tracking delay or the tracking failure occurs in the process of obtaining an image of the target object by using the camera, the terminal device may adjust a target model of the target object in a timely manner, so that an image displayed on the screen is normal, to ensure continuity of a scanning process.

In this application, in the process of obtaining an image of the target object by using the camera, if a tracking delay or a tracking failure occurs, the terminal device may correct a pose in a timely manner with reference to a current image and a previous image, and generate a point cloud model of the target object through fusion by using an accurate pose. In this way, in scenarios such as a scenario in which the target object rotates excessively fast, slides down, or moves out of an image, scanning of the target object can be completed uninterruptedly. This improves accuracy of pose obtaining, and improves object reconstruction efficiency while ensuring an object reconstruction effect.

In a possible implementation, before the process of obtaining an image of the target object by using the camera is started, the terminal device may further obtain a sixth image; determine a pattern of the target object on the sixth image; determine, based on the pattern of the target object on the sixth image, whether a three-dimensional model of the target object is reconstructible; and display first prompt information on a display when determining that the three-dimensional model of the target object is reconstructible, where the first prompt information is used to indicate that the three-dimensional model of the target object is reconstructible.

Optionally, the first prompt information is used to prompt the user to move the camera, so that the target object is in a specified area of an image shot by the camera.

Optionally, when the three-dimensional model of the target object is reconstructible, the terminal device may display a selection control on the screen, and the user taps a reconstruction button or a non-reconstruction button to determine whether to trigger reconstruction of the three-dimensional model. Once the selection control is displayed, it indicates that the three-dimensional model of the target object is reconstructible.

Optionally, the first prompt information may be the selection control, or may be different from the selection control. The first prompt information may be displayed before the selection control is displayed, or may be displayed after the selection control is displayed.

The three-dimensional model of the target object includes a three-dimensional point cloud model of the target object or a point cloud model of the target object.

The terminal device first detects, based on the sixth image, a pattern that is of an object and that is included in the sixth image. The terminal device may predict the sixth image by using the neural network to obtain the pattern that is of the object and that is included in the sixth image. The terminal device may alternatively detect, through model matching, the pattern that is of the object and that is included in the sixth image. The terminal device may alternatively perform detection by using another algorithm. This is not specifically limited in this application.

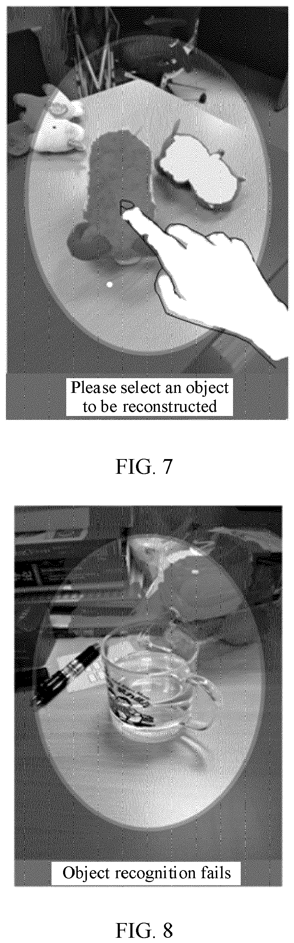

The terminal device extracts the detected object pattern to determine the pattern of the target object. There may be the following two methods: (1) Patterns of all objects are marked by using different colors, and the user selects one of the patterns as the pattern of the target object. To be specific, the terminal device fills detected object patterns by using colors such as red and yellow, and displays color-filled object patterns on the screen. The user selects one of the patterns. A corresponding instruction is generated through this operation. After receiving the instruction, the terminal device determines the pattern of the target object, as shown in FIG. 6 and FIG. 7. (2) A pattern whose weight satisfies a weight condition in the pattern that is of the object and that is included in the sixth image is determined as the pattern of the target object.

Then, the terminal device determines, based on features such as a material and texture richness of the target object, whether the point cloud model of the object is reconstructible. For example, a point cloud model of an object made of glass, reflective metal, or the like is not suitable for reconstruction, and a point cloud model of a smooth-textured object is not suitable for reconstruction.

When determining that the three-dimensional model of the target object is non-reconstructible, the terminal device may display a related word on the screen (as shown in FIG. 8), to remind the user that the object is non-reconstructible. In this way, the user may stop a subsequent operation. This avoids a case in which the user repeatedly attempts scanning but an object reconstruction result cannot be provided. In this case, the terminal device may also display the selection control on the screen, and the user taps the control to trigger a reconstruction or non-reconstruction operation instruction.

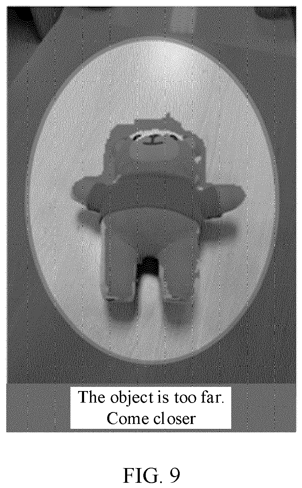

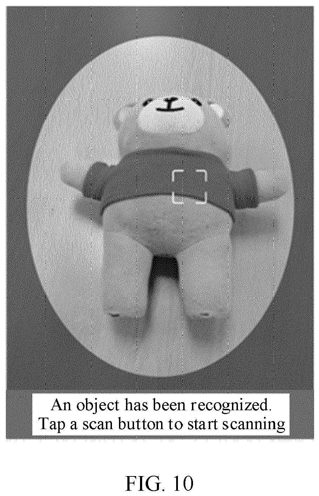

When the terminal device determines that the point cloud model of the target object is suitable for reconstruction, the terminal device may calculate a location of the target object based on a ToF depth map of the sixth image, and guide the user to move the terminal device or the target object based on a relationship between the location of the target object and a location that is of the object and that is required for reconstruction, so that the target object reaches the location required for reconstruction. If the target object has reached the location required for reconstruction, and the location of the target object does not change significantly in N consecutive frames, it indicates that the location of the target object is stable. In this case, the terminal device may display a related word on the screen to remind the user to start scanning (as shown in FIG. 9 and FIG. 10).

In a possible implementation, the terminal device may determine scanning integrity of the target object based on the first target model of the target object or the second target model of the target object; and when the scanning integrity reaches 100%, stop obtaining an image of the target object by using the camera.

As described above, while scanning the target object to obtain a pose in real time, the terminal device generates the first target model or the second target model through fusion based on accumulated poses, and determines the scanning integrity of the target object based on the first target model or the second target model. A purpose of the process of obtaining an image of the target object by using the camera is to obtain a 360° omnidirectional pose of the target object. In this case, in the process of obtaining an image of the target object by using the camera, as the user performs flipping for more angles, poses accumulated through scanning are closer to a scanning purpose. Once integrity of the first target model or the second target model reaches 100%, the process of obtaining an image of the target object by using the camera may be ended. Optionally, calculation of the integrity of the first target model or the second target model may include the following: Assuming that the target object is spherical or ellipsoidal, the terminal device calculates a center point and a radius based on the first target model or the second target model, and divides a spherical surface into K areas. A connection line between a camera location and the center point of the first target model or the second target model, and an intersection point between the connection line and the spherical surface are calculated. A quantity of sub-areas of the spherical surface that are covered by the intersection point is divided by K to obtain the scanning integrity.

In a possible implementation, the terminal device may determine whether the first target model or the second target model has a newly added non-overlapping area relative to the first model; and when the first target model or the second target model has no newly added non-overlapping area, stop obtaining an image of the target object by using the camera. Optionally, that the terminal device determines whether the first target model or the second target model has a newly added non-overlapping area may include: calculating overlapping areas of target models separately obtained in two frames of images. When there is a new non-overlapping edge, the scanning integrity increases. When edges of the target object in all images are overlapped, scanning is complete.

Optionally, when determining that scanning integrity of the first target model, the second target model, or the third target model reaches 100%, correspondingly, the terminal device may display the first target model, the second target model, or the third target model on the screen.

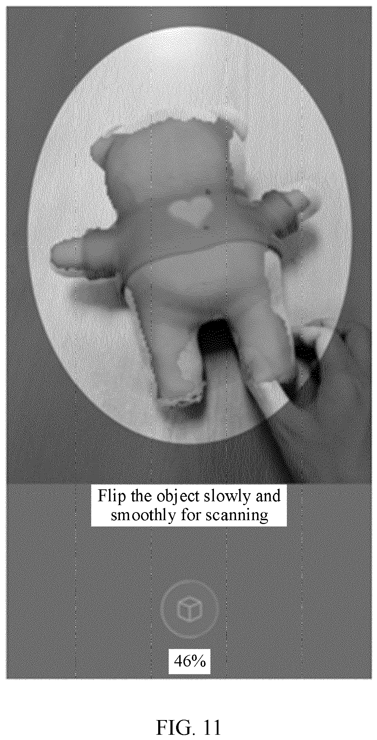

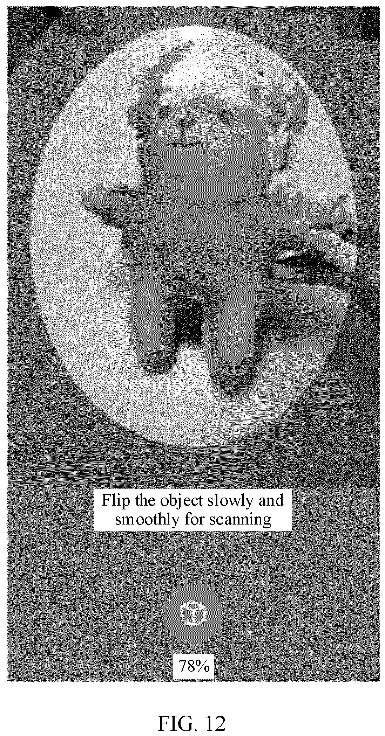

The integrity of scanning the target object by the terminal device may be indicated in a manner such as a number, a progress bar, or a 3D model, as shown in FIG. 11 and FIG. 12. When the integrity of scanning the target object by the terminal device reaches 100%, the terminal device may display a related word on the screen, to prompt the user to end scanning. Alternatively, the terminal device may directly end scanning. In this way, a scanning progress is indicated in a display interface, so that the user conveniently determines a flip angle of the target object in a next step, and the user can be clearly prompted that the scanning ends, so that an unnecessary operation is avoided.

The following uses a specific embodiment to describe in detail the technical solutions in the foregoing method embodiment.

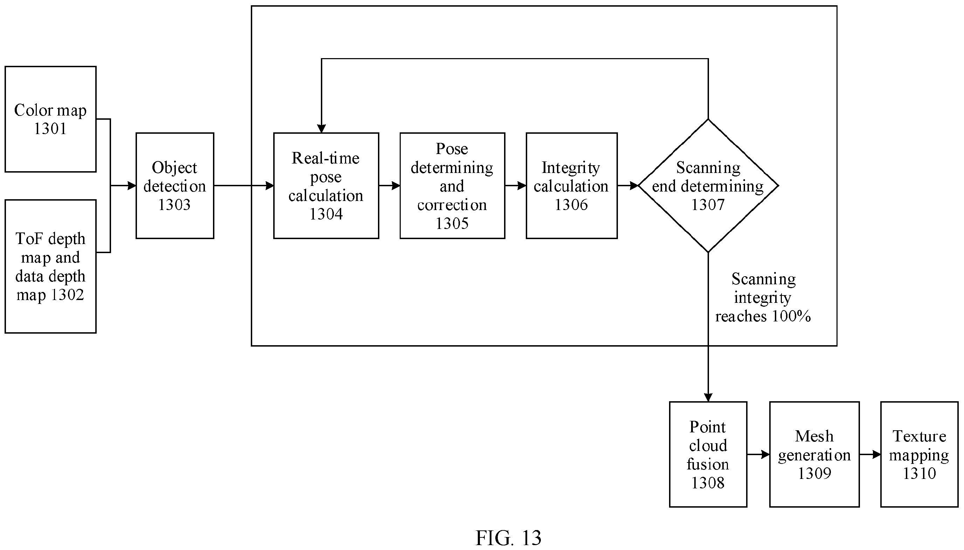

It is assumed that a user performs object reconstruction on a teddy bear by using a terminal device, and a 3D model of the teddy bear is generated on the terminal device. FIG. 13 is a block flowchart depicting an object reconstruction process. As shown in FIG. 13, a color map 1301, a ToF depth map 1302, and object detection 1303 belong to a preprocessing process, real-time pose calculation 1304, pose determining and correction 1305, integrity calculation 1306, and scanning end determining 1307 belong to a real-time processing process, and point cloud fusion 1308, mesh generation 1309, and texture mapping 1310 belong to a post-processing process.

The terminal device scans the teddy bear by using a rear-facing camera, to obtain the color map 1301 and the ToF depth map 1302 that are included in a frame image.

In the object detection 1303, the terminal device detects a plane in the ToF depth map based on the ToF depth map by using an agglomerative hierarchical clustering (Agglomerative Hierarchical Clustering, AHC) algorithm, and all planes P1, P2, ..., and Pn in the ToF depth map can be detected by using the AHC algorithm. Based on a quantity of pixels occupied by each plane, a plane with a largest quantity of pixels is extracted as a principal plane P. The terminal device projects the pixels of the principal plane into 3D space, and generates a bounding box in the 3D space. The principal plane is used as a bottom surface of the bounding box, and the height of the bounding box is H (preset). The ToF depth map is projected into the 3D space, and 3D points in the bounding box are clustered. A clustering principle is that a depth difference between adjacent pixels in each cluster is not greater than K; and a gradient of a color map is greater than M and a depth normal vector is greater than N. Each cluster is used as a detected object. After detecting an object pattern, the terminal device extracts a pattern of the teddy bear. The terminal device may extract the pattern in any one of the following manners: (1) All detected object patterns are marked by using different colors, and the user performs selection. As shown in FIG. 7 and FIG. 8, the terminal device recognizes patterns of two objects, and the patterns of the two objects are displayed in red and yellow respectively on the screen, to prompt the user to perform selection. The user may directly tap the pattern that is of the teddy bear and that is displayed in an interface. (2) The terminal device calculates a weight of a pattern of each object, and determines a pattern whose weight satisfies a weight condition as a pattern of a target object. For example, weight = f (distance from a point obtained by projecting a center of a bounding box of an object onto a two-dimensional graph to an image center) x coef1 + h (quantity of pixels occupied by the object) x coef2, where f and h are normalization functions, and coef1 and coef2 are weight coefficients. An object pattern with a highest weight is selected. For another example, the terminal device evaluates a pattern of an object in an image by using a deep learning method, outputs a reconstruction suitability coefficient of a pattern of each object, and selects an object pattern with a highest coefficient. The terminal device determines, based on a material, a texture, and the like of the teddy bear, whether object reconstruction can be performed on the teddy bear based on a point cloud model of the teddy bear. When determining that reconstruction can be performed, the terminal device guides the user to move the terminal device or the teddy bear, so that the teddy bear reaches a location required for reconstruction. This process is described in the foregoing method embodiment, and details are not described herein again.

In the real-time pose calculation 1304, the pose determining and correction 1305, and the integrity calculation 1306, methods performed by the terminal device are described in the foregoing method embodiment, and details are not described herein again.

In the scanning end determining 1307, when scanning integrity calculated by the terminal device reaches 100%, the terminal device may end a process of obtaining an image of the teddy bear by using the camera, and proceed to a next process. When the scanning integrity does not reach 100%, the terminal device skips to the real-time pose calculation 1304, and continues to obtain an image of the teddy bear by using the camera.

In the point cloud fusion 1308, the terminal device converts a 2D ToF depth map sequence into a 3D point cloud, and fuses the point cloud into a 3D model with reference to the foregoing pose.

In the mesh generation 1309, the terminal device meshes the 3D point cloud model, generates a triangular patch, corrects an area that is not scanned, and removes an isolation point and an isolation patch that are not connected to a principal mesh.

In the texture mapping 1310, the terminal device maps a texture of a corresponding area on a key image to a texture map, and performs edge smoothing at a seam of different key images.

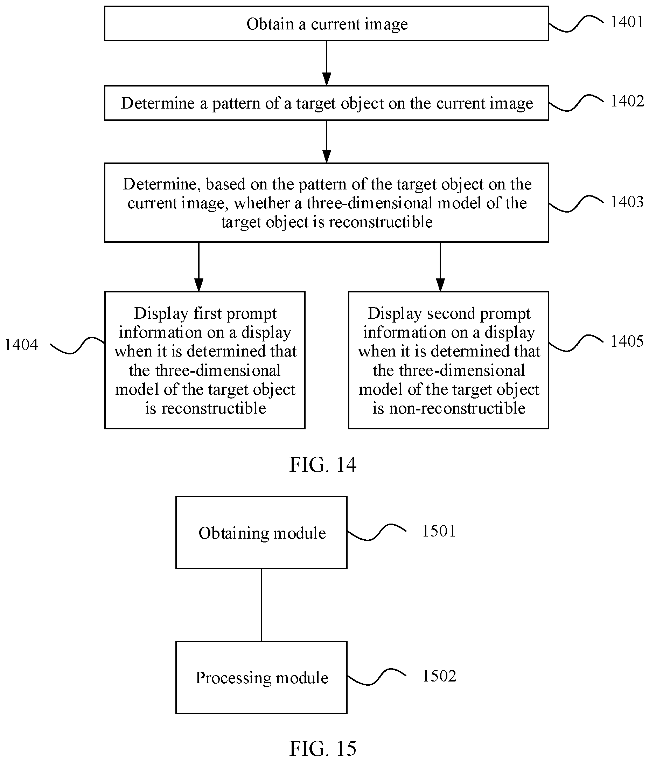

After the foregoing process, the terminal device may generate a point cloud model of the teddy bear shown in FIG. 14 to FIG. 16, and complete object reconstruction of the teddy bear.

FIG. 14 is a flowchart depicting an embodiment of a model reconstruction method according to this application. As shown in FIG. 14, the method in this embodiment may be performed by the terminal device (for example, the mobile phone 100) in the foregoing embodiment. The model reconstruction method may include the following steps.

Step 1401: Obtain a current image.

The current image is any one of a plurality of frames of images of a target object that are obtained by a camera. A user opens a rear-facing camera of the terminal device, holds the target object with one hand, holds the terminal device with the other hand, and places the target object within a shooting range of the camera. The camera captures an image of the target object, to obtain the current image.

Step 1402: Determine a pattern of the target object on the current image.

The terminal device may predict the current image by using a neural network to obtain a pattern that is of an object and that is included in the current image. The terminal device may alternatively detect, through model matching, the pattern that is of the object and that is included in the current image. The terminal device may alternatively perform detection by using another algorithm. This is not specifically limited in this application.

The terminal device extracts the detected object pattern to determine the pattern of the target object. There may be the following two methods: (1) Patterns of all objects are marked by using different colors, and the user selects one of the patterns as the pattern of the target object. To be specific, the terminal device fills detected object patterns by using colors such as red and yellow, and displays color-filled object patterns on a screen. The user selects one of the patterns. A corresponding instruction is generated through this operation. After receiving the instruction, the terminal device determines the pattern of the target object, as shown in FIG. 6 and FIG. 7. (2) A pattern whose weight satisfies a weight condition in the pattern that is of the object and that is included in the current image is determined as the pattern of the target object.

Step 1403: Determine, based on the pattern of the target object on the current image, whether a three-dimensional model of the target object is reconstructible.

Then, the terminal device determines, based on features such as a material and texture richness of the target object, whether the point cloud model of the object is reconstructible. For example, a point cloud model of an object made of glass, reflective metal, or the like is not suitable for reconstruction, and a point cloud model of a smooth-textured object is not suitable for reconstruction.

Step 1404: Display first prompt information on a display when it is determined that the three-dimensional model of the target object is reconstructible.

Optionally, the first prompt information is used to prompt the user to move the camera, so that the target object is in a specified area of an image shot by the camera.

Optionally, when the three-dimensional model of the target object is reconstructible, the terminal device may display a selection control on the screen, and the user taps a reconstruction button or a non-reconstruction button to determine whether to trigger reconstruction of the three-dimensional model. Once the selection control is displayed, it indicates that the three-dimensional model of the target object is reconstructible.

When the terminal device determines that the point cloud model of the target object is suitable for reconstruction, the terminal device may calculate a location of the target object based on a ToF depth map of the current image, and guide the user to move the terminal device or the target object based on a relationship between the location of the target object and a location that is of the object and that is required for reconstruction, so that the target object reaches the location required for reconstruction. If the target object has reached the location required for reconstruction, and the location of the target object does not change significantly in N consecutive frames, it indicates that the location of the target object is stable. In this case, the terminal device may display a related word on the screen to remind the user to start scanning (as shown in FIG. 9 and FIG. 10).

Step 1405: Display second prompt information on a display when it is determined that the three-dimensional model of the target object is non-reconstructible.

When determining that the point cloud model of the target object is not suitable for reconstruction, the terminal device may display a related word on the screen (as shown in FIG. 8), to remind the user that the object is non-reconstructible. In this way, the user may stop a subsequent operation. This avoids a case in which the user repeatedly attempts scanning but an object reconstruction result cannot be provided.

It may be understood that, to implement the foregoing functions, the terminal device includes corresponding hardware structures and/or software modules for performing the functions. A person skilled in the art should easily be aware that in combination with method steps in the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the terminal device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in this application, division into modules is an example, and is merely logical function division. During actual implementation, there may be another division manner.

When each functional module is obtained through division based on each corresponding function, FIG. 15 is a schematic diagram depicting a structure of an apparatus according to an embodiment of this application. As shown in FIG. 15, the apparatus in this embodiment may be a model generation apparatus configured to implement a model generation method, or may be a model reconstruction apparatus configured to implement a model reconstruction method. The apparatus is used in a terminal device, and may include an obtaining module 1501 and a processing module 1502.

When the apparatus is the model generation apparatus, the obtaining module 1501 is configured to obtain a first image, where the first image is any one of a plurality of frames of images of a target object that are obtained by a camera; and the processing module 1502 is configured to: obtain a pose of the first image based on the first image, where the pose of the first image is a pose that is of the target object and that exists when the first image is shot; obtain accuracy of the pose of the first image; obtain a corrected pose of the first image or a corrected pose of a second image when the accuracy does not satisfy an accuracy condition, where the second image is an image obtained later than the first image in the plurality of frames of images; and generate a first target model of the target object based on the corrected pose of the first image, or generate a second target model of the target object based on the corrected pose of the second image.

In a possible implementation, the processing module 1502 is specifically configured to: generate the second target model of the target object based on the corrected pose of the second image, a first model, and a second model, where the first model is a point cloud model that is of the target object and that is generated based on a third image, the third image is an image in the plurality of frames of images that precedes the first image in an obtaining time order, and the second model is a point cloud model that is of the target object and that is generated based on the second image; and the generating a first target model of the target object based on the corrected pose of the first image includes: generating the first target model of the target object based on the corrected pose of the first image, a third model, and the first model, where the third model is a point cloud model that is of the target object and that is generated based on the first image.

In a possible implementation, the first model is a point cloud model that is of the target object and that is generated based on at least two frames of images that are in the plurality of frames of images and obtained earlier than the first image and that include the third image; and/or the second model is a point cloud model that is of the target object and that is generated based on at least two frames of images from the first image to the second image in the obtaining time order in the plurality of frames of images.

In a possible implementation, the plurality of frames of images each include a depth map.

In a possible implementation, the processing module 1502 is further configured to generate a third target model of the target object based on the pose of the first image, the first image, and the first model when the accuracy satisfies the accuracy condition.

In a possible implementation, the plurality of frames of images each include a color map, and the processing module 1502 is specifically configured to: obtain a fourth image, where the fourth image is a key image obtained earlier than the first image in the plurality of frames of images, and a color map included in the fourth image matches a color map included in the first image; calculate an initial pose of the first image based on the fourth image and the first image; and correct the initial pose of the first image based on the first model and the third model to obtain the corrected pose of the first image, where the third model is the point cloud model that is of the target object and that is generated based on the first image.

In a possible implementation, the processing module 1502 is specifically configured to: determine, based on a location of a matched pixel in the color map included in the fourth image and a location of a matched pixel in the color map included in the first image, a target pixel in a depth map included in the fourth image and a target pixel in a depth map included in the first image; and calculate the initial pose of the first image based on the target pixel in the depth map included in the fourth image and the target pixel in the depth map included in the first image.

In a possible implementation, the plurality of frames of images each include a color map, and the processing module 1502 is specifically configured to: obtain a fifth image, where the fifth image is a key image obtained earlier than the first image in the plurality of frames of images, and a color map included in the fifth image matches a color map included in the second image; calculate an initial pose of the second image based on the fifth image and the second image; and correct the initial pose of the second image based on the first model and the second model to obtain the corrected pose of the second image, where the second model is the point cloud model that is of the target object and that is generated based on the second image.

In a possible implementation, the processing module 1502 is specifically configured to: determine, based on a location of a matched pixel in the color map included in the fifth image and a location of a matched pixel in the color map included in the second image, a target pixel in a depth map included in the fifth image and a target pixel in a depth map included in the second image; and calculate the initial pose of the second image based on the target pixel in the depth map included in the fifth image and the target pixel in the depth map included in the second image.

In a possible implementation, the processing module 1502 is specifically configured to: perform ICP calculation on the first image and the third image to obtain the pose of the first image, where the third image is the image in the plurality of frames of images that precedes the first image in the obtaining time order; or perform ICP calculation on the first image and a depth projection map obtained by projecting the first model based on a pose of the third image, to obtain the pose of the first image.

In a possible implementation, the accuracy of the pose includes: a percentage of a quantity of matching points corresponding to the ICP calculation, or a matching error corresponding to the ICP calculation; and that the accuracy does not satisfy the accuracy condition includes: the percentage of the quantity of matching points is less than the first threshold, or the matching error is greater than the second threshold.

In a possible implementation, the first image includes N consecutive frames of images.

In a possible implementation, the obtaining module 1501 is further configured to obtain a sixth image; and the processing module 1502 is further configured to: determine a pattern of the target object on the sixth image; determine, based on the pattern of the target object on the sixth image, whether a three-dimensional model of the target object is reconstructible; and display first prompt information on a display when determining that the three-dimensional model of the target object is reconstructible, where the first prompt information is used to indicate that the three-dimensional model of the target object is reconstructible.

In a possible implementation, the first prompt information is used to prompt a user to move the camera, so that the target object is in a specified area of an image shot by the camera.

In a possible implementation, the processing module 1502 is further configured to display second prompt information on the display when determining that the three-dimensional model of the target object is non-reconstructible, where the second prompt information is used to indicate that the three-dimensional model of the target object is non-reconstructible.

In a possible implementation, the processing module 1502 is further configured to: display a selection control on the display; and receive a first operation instruction, where the first operation instruction is an instruction generated based on an operation performed by the user on the selection control in the display interface, and the first operation instruction is used to instruct to reconstruct or not to reconstruct the three-dimensional model of the target object.

In a possible implementation, the processing module 1502 is specifically configured to: obtain, based on the sixth image, a pattern that is of at least one object and that is included in the sixth image; display a mark of the pattern of the at least one object on the display; receive a second operation instruction, where the second operation instruction is an instruction generated based on a selection operation performed on the mark, and the second operation instruction is used to indicate one pattern in the pattern of the at least one object; and determine, as the pattern of the target object according to the second operation instruction, the pattern that is of an object and that is selected by the user.

In a possible implementation, the processing module 1502 is further configured to: determine scanning integrity of the target object based on the first target model of the target object or the second target model of the target object; and when the scanning integrity reaches 100%, stop obtaining an image of the target object by using the camera.

In a possible implementation, the processing module 1502 is further configured to: determine whether the first target model of the target object or the second target model of the target object has a newly added area relative to the first model; and when the first target model of the target object or the second target model of the target object has no newly added area relative to the first model, stop obtaining an image of the target object by using the camera.

In a possible implementation, the processing module 1502 is further configured to display the three-dimensional model of the target object, where the three-dimensional model is a model that is of the target object and that is generated based on the first target model of the target object or the second target model of the target object.

When the apparatus is the model reconstruction apparatus, the obtaining module 1501 is configured to obtain a current image, where the current image is any one of a plurality of frames of images of a target object that are obtained by a camera; and the processing module 1502 is configured to: determine a pattern of the target object on the current image; determine, based on the pattern of the target object on the current image, whether a three-dimensional model of the target object is reconstructible; and display first prompt information on a display when determining that the three-dimensional model of the target object is reconstructible, where the first prompt information is used to indicate that the three-dimensional model of the target object is reconstructible.

In a possible implementation, the first prompt information is used to prompt a user to move the camera, so that the target object is in a specified area of an image shot by the camera.

In a possible implementation, the processing module 1502 is further configured to display second prompt information on the display when determining that the three-dimensional model of the target object is non-reconstructible, where the second prompt information is used to indicate that the three-dimensional model of the target object is non-reconstructible.

In a possible implementation, the processing module 1502 is further configured to: display a selection control on the display; and receive a first operation instruction, where the first operation instruction is an instruction generated based on an operation performed by the user on the selection control in the display interface, and the first operation instruction is used to instruct to reconstruct or not to reconstruct the three-dimensional model of the target object.

In a possible implementation, the processing module 1502 is specifically configured to: obtain, based on the current image, a pattern that is of at least one object and that is included in the current image; display a mark of the pattern of the at least one object on the display; receive a second operation instruction, where the second operation instruction is an instruction generated based on a selection operation performed on the mark, and the second operation instruction is used to indicate one pattern in the pattern of the at least one object; and determine, as the pattern of the target object according to the second operation instruction, the pattern that is of an object and that is selected by the user.

In a possible implementation, the obtaining module 1501 is further configured to obtain a first image when the three-dimensional model of the target object is reconstructible, where the first image is an image obtained later than the current image in the plurality of frames of images; and the processing module 1502 is further configured to: obtain a pose of the first image based on the first image, where the pose of the first image is a pose that is of the target object and that exists when the first image is shot; obtain accuracy of the pose of the first image; obtain a corrected pose of the first image or a corrected pose of a second image when the accuracy does not satisfy an accuracy condition, where the second image is an image obtained later than the first image in the plurality of frames of images; and generate a first target model of the target object based on the corrected pose of the first image, or generate a second target model of the target object based on the corrected pose of the second image.

It should be noted that the obtaining module 1501 may be a camera of the terminal device, and the processing module 1502 may be a processor of the terminal device.

The apparatus in this embodiment may be configured to perform the technical solutions in the method embodiments shown in FIG. 2 to FIG. 14. Implementation principles and technical effects thereof are similar, and details are not described herein again.

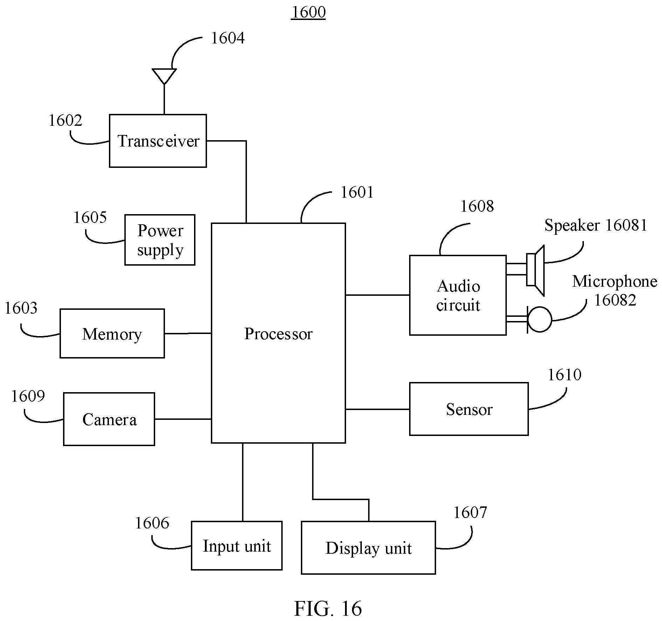

FIG. 16 is a schematic diagram depicting a structure of a terminal device according to this application. As shown in FIG. 16, the terminal device 1600 includes a processor 1601.

Optionally, the terminal device 1600 further includes a transceiver 1602.

Optionally, the terminal device 1600 further includes a memory 1603. The processor 1601, the transceiver 1602, and the memory 1603 may communicate with each other through an internal connection path, to transfer a control signal and/or a data signal.

The memory 1603 is configured to store a computer program. The processor 1601 is configured to execute the computer program stored in the memory 1603, to implement the functions in the foregoing apparatus embodiment. Specifically, the processor 1601 may be configured to perform operations and/or processing performed by the processing module 1502 in the apparatus embodiment (for example, FIG. 15).

For example, the processor 1601 obtains a pose of a first image based on the first image, where the pose of the first image is a pose that is of a target object and that exists when the first image is shot; obtains accuracy of the pose of the first image; obtains a corrected pose of the first image or a corrected pose of a second image when the accuracy does not satisfy an accuracy condition, where the second image is an image obtained later than the first image in a plurality of frames of images; and generates a first target model of the target object based on the corrected pose of the first image, or generates a second target model of the target object based on the corrected pose of the second image. Optionally, the memory 1603 may be integrated into the processor 1601, or may be independent of the processor 1601. Optionally, the terminal device 1600 may further include an antenna 1604, configured to transmit a signal that is output by the transceiver 1602. Alternatively, the transceiver 1602 receives a signal through the antenna.

Optionally, the terminal device 1600 may further include a power supply 1605, configured to supply power to various components or circuits in the terminal device.

In addition, to improve functions of the terminal device, the terminal device 1600 may further include one or more of an input unit 1606, a display unit 1607 (which may also be considered as an output unit), an audio circuit 1608, a camera 1609, a sensor 1610, and the like. The audio circuit may further include a speaker 16081, a microphone 16082, and the like.

Specifically, the camera 1609 may be configured to perform operations and/or processing performed by the obtaining module 1501 in the apparatus embodiment (for example, FIG. 15).

For example, the camera 1609 obtains the first image, where the first image is any one of the plurality of frames of images of the target object that are obtained by the camera.

For another example, the camera 1609 obtains the plurality of frames of images, including one or more of a second image to a sixth image.

In an implementation process, the steps in the foregoing method embodiments may be completed by using a hardware integrated logic circuit in the processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, any conventional processor, or the like. The steps of the methods disclosed in the embodiments of this application may be directly executed and completed by using a hardware encoding processor, or may be executed and completed by using a combination of hardware and software modules in the encoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information from the memory and completes the steps in the foregoing methods in combination with the hardware of the processor.

The memory in the foregoing embodiments may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, the memory in the system and method described in this specification includes but is not limited to these memories and any memory of another proper type.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (a personal computer, a server, a network device, or the like) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A model generation method, comprising:
obtaining a first image, wherein the first image is any one of a plurality of frames of images of a target object that are obtained by a camera;
obtaining a pose of the first image based on the first image, wherein the pose of the first image is a pose that is of the target object and that exists when the first image is shot;
obtaining accuracy of the pose of the first image;
obtaining a corrected pose of the first image or a corrected pose of a second image when the accuracy does not satisfy an accuracy condition, wherein the second image is an image obtained later than the first image in the plurality of frames of images; and
generating a first target model of the target object based on the corrected pose of the first image, or generating a second target model of the target object based on the corrected pose of the second image.

2. The method according to claim 1, wherein the generating a second target model of the target object based on the corrected pose of the second image comprises:
generating the second target model of the target object based on the corrected pose of the second image, a first model, and a second model, wherein the first model is a point cloud model that is of the target object and that is generated based on a third image, the third image is an image in the plurality of frames of images that precedes the first image in an obtaining time order, and the second model is a point cloud model that is of the target object and that is generated based on the second image; and
the generating a first target model of the target object based on the corrected pose of the first image comprises:
generating the first target model of the target object based on the corrected pose of the first image, a third model, and the first model, wherein the third model is a point cloud model that is of the target object and that is generated based on the first image.

3. The method according to claim 2, wherein the first model is a point cloud model that is of the target object and that is generated based on at least two frames of images that are in the plurality of frames of images and obtained earlier than the first image and that comprise the third image; and/or
the second model is a point cloud model that is of the target object and that is generated based on at least two frames of images from the first image to the second image in the obtaining time order in the plurality of frames of images.

4. The method according to any one of claims 1 to 3, wherein the plurality of frames of images each comprise a depth map.

5. The method according to any one of claims 1 to 4, wherein after the obtaining accuracy of the pose of the first image, the method further comprises:
generating a third target model of the target object based on the pose of the first image, the first image, and the first model when the accuracy satisfies the accuracy condition.

6. The method according to any one of claims 1 to 5, wherein the plurality of frames of images each comprise a color map, and the obtaining a corrected pose of the first image comprises:
obtaining a fourth image, wherein the fourth image is a key image obtained earlier than the first image in the plurality of frames of images, and a color map comprised in the fourth image matches a color map comprised in the first image;
calculating an initial pose of the first image based on the fourth image and the first image; and
correcting the initial pose of the first image based on the first model and the third model to obtain the corrected pose of the first image, wherein the third model is the point cloud model that is of the target object and that is generated based on the first image.

7. The method according to claim 6, wherein the calculating an initial pose of the first image based on the fourth image and the first image comprises:
determining, based on a location of a matched pixel in the color map comprised in the fourth image and a location of a matched pixel in the color map comprised in the first image, a target pixel in a depth map comprised in the fourth image and a target pixel in a depth map comprised in the first image; and
calculating the initial pose of the first image based on the target pixel in the depth map comprised in the fourth image and the target pixel in the depth map comprised in the first image.

8. The method according to any one of claims 1 to 5, wherein the plurality of frames of images each comprise a color map, and the obtaining a corrected pose of a second image comprises:
obtaining a fifth image, wherein the fifth image is a key image obtained earlier than the first image in the plurality of frames of images, and a color map comprised in the fifth image matches a color map comprised in the second image;
calculating an initial pose of the second image based on the fifth image and the second image; and
correcting the initial pose of the second image based on the first model and the second model to obtain the corrected pose of the second image, wherein the second model is the point cloud model that is of the target object and that is generated based on the second image.

9. The method according to claim 8, wherein the calculating an initial pose of the second image based on the fifth image and the second image comprises:
determining, based on a location of a matched pixel in the color map comprised in the fifth image and a location of a matched pixel in the color map comprised in the second image, a target pixel in a depth map comprised in the fifth image and a target pixel in a depth map comprised in the second image; and
calculating the initial pose of the second image based on the target pixel in the depth map comprised in the fifth image and the target pixel in the depth map comprised in the second image.

10. The method according to any one of claims 1 to 9, wherein the obtaining a pose of the first image based on the first image comprises:
performing ICP calculation on the first image and the third image to obtain the pose of the first image, wherein the third image is the image in the plurality of frames of images that precedes the first image in the obtaining time order; or
performing ICP calculation on the first image and a depth projection map obtained by projecting the first model based on a pose of the third image, to obtain the pose of the first image.

11. The method according to claim 10, wherein the accuracy of the pose comprises: a percentage of a quantity of matching points corresponding to the ICP calculation, or a matching error corresponding to the ICP calculation; and
that the accuracy does not satisfy the accuracy condition comprises: the percentage of the quantity of matching points is less than a first threshold, or the matching error is greater than a second threshold.

12. The method according to claim 11, wherein the first image comprises N consecutive frames of images.

13. The method according to any one of claims 1 to 12, wherein before the obtaining a first image, the method further comprises:
obtaining a sixth image;
determining a pattern of the target object on the sixth image;
determining, based on the pattern of the target object on the sixth image, whether a three-dimensional model of the target object is reconstructible; and
displaying first prompt information on a display when determining that the three-dimensional model of the target object is reconstructible, wherein the first prompt information is used to indicate that the three-dimensional model of the target object is reconstructible.

14. The method according to claim 13, wherein the first prompt information is used to prompt a user to move the camera, so that the target object is in a specified area of an image shot by the camera.

15. The method according to claim 13 or 14, wherein after the determining, based on the pattern of the target object on the sixth image, whether a three-dimensional model of the target object is reconstructible, the method further comprises:
displaying second prompt information on the display when determining that the three-dimensional model of the target object is non-reconstructible, wherein the second prompt information is used to indicate that the three-dimensional model of the target object is non-reconstructible.

16. The method according to any one of claims 13 to 15, wherein the method further comprises:
displaying a selection control on the display; and
receiving a first operation instruction, wherein the first operation instruction is an instruction generated based on an operation performed by the user on the selection control in the display interface, and the first operation instruction is used to instruct to reconstruct or not to reconstruct the three-dimensional model of the target object.

17. The method according to any one of claims 13 to 16, wherein the determining a pattern of the target object on the sixth image comprises:
obtaining, based on the sixth image, a pattern that is of at least one object and that is comprised in the sixth image;
displaying a mark of the pattern of the at least one object on the display;
receiving a second operation instruction, wherein the second operation instruction is an instruction generated based on a selection operation performed on the mark, and the second operation instruction is used to indicate one pattern in the pattern of the at least one object; and
determining, as the pattern of the target object according to the second operation instruction, the pattern that is of an object and that is selected by the user.

18. The method according to any one of claims 1 to 17, wherein after the generating a first target model of the target object or generating a second target model of the target object, the method further comprises:
determining scanning integrity of the target object based on the first target model of the target object or the second target model of the target object; and
when the scanning integrity reaches 100%, stopping obtaining an image of the target object by using the camera.

19. The method according to any one of claims 1 to 17, wherein after the generating a first target model of the target object or generating a second target model of the target object, the method further comprises:
determining whether the first target model of the target object or the second target model of the target object has a newly added area relative to the first model; and
when the first target model of the target object or the second target model of the target object has no newly added area relative to the first model, stopping obtaining an image of the target object by using the camera.

20. The method according to claim 18 or 19, wherein the method further comprises:
displaying the three-dimensional model of the target object, wherein the three-dimensional model is a model that is of the target object and that is generated based on the first target model of the target object or the second target model of the target object.

21. A model reconstruction method, comprising:
obtaining a current image, wherein the current image is any one of a plurality of frames of images of a target object that are obtained by a camera;
determining a pattern of the target object on the current image;
determining, based on the pattern of the target object on the current image, whether a three-dimensional model of the target object is reconstructible; and
displaying first prompt information on a display when determining that the three-dimensional model of the target object is reconstructible, wherein the first prompt information is used to indicate that the three-dimensional model of the target object is reconstructible.

22. The method according to claim 21, wherein the first prompt information is used to prompt a user to move the camera, so that the target object is in a specified area of an image shot by the camera.

23. The method according to claim 21 or 22, wherein after the determining, based on the pattern of the target object on the current image, whether a three-dimensional model of the target object is reconstructible, the method further comprises:
displaying second prompt information on the display when determining that the three-dimensional model of the target object is non-reconstructible, wherein the second prompt information is used to indicate that the three-dimensional model of the target object is non-reconstructible.

24. The method according to any one of claims 21 to 23, wherein the method further comprises:
displaying a selection control on the display; and
receiving a first operation instruction, wherein the first operation instruction is an instruction generated based on an operation performed by the user on the selection control in the display interface, and the first operation instruction is used to instruct to reconstruct or not to reconstruct the three-dimensional model of the target object.

25. The method according to any one of claims 21 to 24, wherein the determining a pattern of the target object on the current image comprises:
obtaining, based on the current image, a pattern that is of at least one object and that is comprised in the current image;
displaying a mark of the pattern of the at least one object on the display;
receiving a second operation instruction, wherein the second operation instruction is an instruction generated based on a selection operation performed on the mark, and the second operation instruction is used to indicate one pattern in the pattern of the at least one object; and
determining, as the pattern of the target object according to the second operation instruction, the pattern that is of an object and that is selected by the user.

26. The method according to any one of claims 21 to 25, wherein the method further comprises:
obtaining a first image when the three-dimensional model of the target object is reconstructible, wherein the first image is an image obtained later than the current image in the plurality of frames of images;
obtaining a pose of the first image based on the first image, wherein the pose of the first image is a pose that is of the target object and that exists when the first image is shot;
obtaining accuracy of the pose of the first image;
obtaining a corrected pose of the first image or a corrected pose of a second image when the accuracy does not satisfy an accuracy condition, wherein the second image is an image obtained later than the first image in the plurality of frames of images; and
generating a first target model of the target object based on the corrected pose of the first image, or generating a second target model of the target object based on the corrected pose of the second image.

27. A model generation apparatus, comprising:
an obtaining module, configured to obtain a first image, wherein the first image is any one of a plurality of frames of images of a target object that are obtained by a camera; and
a processing module, configured to: obtain a pose of the first image based on the first image, wherein the pose of the first image is a pose that is of the target object and that exists when the first image is shot; obtain accuracy of the pose of the first image; obtain a corrected pose of the first image or a corrected pose of a second image when the accuracy does not satisfy an accuracy condition, wherein the second image is an image obtained later than the first image in the plurality of frames of images; and generate a first target model of the target object based on the corrected pose of the first image, or generate a second target model of the target object based on the corrected pose of the second image.

28. The apparatus according to claim 27, wherein the processing module is specifically configured to: generate the second target model of the target object based on the corrected pose of the second image, a first model, and a second model, wherein the first model is a point cloud model that is of the target object and that is generated based on a third image, the third image is an image in the plurality of frames of images that precedes the first image in an obtaining time order, and the second model is a point cloud model that is of the target object and that is generated based on the second image; and the generating a first target model of the target object based on the corrected pose of the first image comprises: generating the first target model of the target object based on the corrected pose of the first image, a third model, and the first model, wherein the third model is a point cloud model that is of the target object and that is generated based on the first image.

29. The apparatus according to claim 28, wherein the first model is a point cloud model that is of the target object and that is generated based on at least two frames of images that are in the plurality of frames of images and obtained earlier than the first image and that comprise the third image; and/or
the second model is a point cloud model that is of the target object and that is generated based on at least two frames of images from the first image to the second image in the obtaining time order in the plurality of frames of images.

30. The apparatus according to any one of claims 27 to 29, wherein the plurality of frames of images each comprise a depth map.

31. The apparatus according to any one of claims 27 to 30, wherein the processing module is further configured to generate a third target model of the target object based on the pose of the first image, the first image, and the first model when the accuracy satisfies the accuracy condition.

32. The apparatus according to any one of claims 27 to 31, wherein the plurality of frames of images each comprise a color map, and the processing module is specifically configured to: obtain a fourth image, wherein the fourth image is a key image obtained earlier than the first image in the plurality of frames of images, and a color map comprised in the fourth image matches a color map comprised in the first image; calculate an initial pose of the first image based on the fourth image and the first image; and correct the initial pose of the first image based on the first model and the third model to obtain the corrected pose of the first image, wherein the third model is the point cloud model that is of the target object and that is generated based on the first image.

33. The apparatus according to claim 32, wherein the processing module is specifically configured to: determine, based on a location of a matched pixel in the color map comprised in the fourth image and a location of a matched pixel in the color map comprised in the first image, a target pixel in a depth map comprised in the fourth image and a target pixel in a depth map comprised in the first image; and calculate the initial pose of the first image based on the target pixel in the depth map comprised in the fourth image and the target pixel in the depth map comprised in the first image.

34. The apparatus according to any one of claims 27 to 31, wherein the plurality of frames of images each comprise a color map, and the processing module is specifically configured to: obtain a fifth image, wherein the fifth image is a key image obtained earlier than the first image in the plurality of frames of images, and a color map comprised in the fifth image matches a color map comprised in the second image; calculate an initial pose of the second image based on the fifth image and the second image; and correct the initial pose of the second image based on the first model and the second model to obtain the corrected pose of the second image, wherein the second model is the point cloud model that is of the target object and that is generated based on the second image.

35. The apparatus according to claim 34, wherein the processing module is specifically configured to: determine, based on a location of a matched pixel in the color map comprised in the fifth image and a location of a matched pixel in the color map comprised in the second image, a target pixel in a depth map comprised in the fifth image and a target pixel in a depth map comprised in the second image; and calculate the initial pose of the second image based on the target pixel in the depth map comprised in the fifth image and the target pixel in the depth map comprised in the second image.

36. The apparatus according to any one of claims 27 to 35, wherein the processing module is specifically configured to: perform ICP calculation on the first image and the third image to obtain the pose of the first image, wherein the third image is the image in the plurality of frames of images that precedes the first image in the obtaining time order; or perform ICP calculation on the first image and a depth projection map obtained by projecting the first model based on a pose of the third image, to obtain the pose of the first image.

37. The apparatus according to claim 36, wherein the accuracy of the pose comprises: a percentage of a quantity of matching points corresponding to the ICP calculation, or a matching error corresponding to the ICP calculation; and
that the accuracy does not satisfy the accuracy condition comprises: the percentage of the quantity of matching points is less than a first threshold, or the matching error is greater than a second threshold.

38. The apparatus according to claim 37, wherein the first image comprises N consecutive frames of images.

39. The apparatus according to any one of claims 27 to 38, wherein the obtaining module is further configured to obtain a sixth image; and
the processing module is further configured to: determine a pattern of the target object on the sixth image; determine, based on the pattern of the target object on the sixth image, whether a three-dimensional model of the target object is reconstructible; and display first prompt information on a display when determining that the three-dimensional model of the target object is reconstructible, wherein the first prompt information is used to indicate that the three-dimensional model of the target object is reconstructible.

40. The apparatus according to claim 39, wherein the first prompt information is used to prompt a user to move the camera, so that the target object is in a specified area of an image shot by the camera.

41. The apparatus according to claim 39 or 40, wherein the processing module is further configured to display second prompt information on the display when determining that the three-dimensional model of the target object is non-reconstructible, wherein the second prompt information is used to indicate that the three-dimensional model of the target object is non-reconstructible.

42. The apparatus according to any one of claims 39 to 41, wherein the processing module is further configured to: display a selection control on the display; and receive a first operation instruction, wherein the first operation instruction is an instruction generated based on an operation performed by the user on the selection control in the display interface, and the first operation instruction is used to instruct to reconstruct or not to reconstruct the three-dimensional model of the target object.

43. The apparatus according to any one of claims 39 to 42, wherein the processing module is specifically configured to: obtain, based on the sixth image, a pattern that is of at least one object and that is comprised in the sixth image; display a mark of the pattern of the at least one object on the display; receive a second operation instruction, wherein the second operation instruction is an instruction generated based on a selection operation performed on the mark, and the second operation instruction is used to indicate one pattern in the pattern of the at least one object; and determine, as the pattern of the target object according to the second operation instruction, the pattern that is of an object and that is selected by the user.

44. The apparatus according to any one of claims 27 to 43, wherein the processing module is further configured to: determine scanning integrity of the target object based on the first target model of the target object or the second target model of the target object; and when the scanning integrity reaches 100%, stop obtaining an image of the target object by using the camera.

45. The apparatus according to any one of claims 27 to 43, wherein the processing module is further configured to: determine whether the first target model of the target object or the second target model of the target object has a newly added area relative to the first model; and when the first target model of the target object or the second target model of the target object has no newly added area relative to the first model, stop obtaining an image of the target object by using the camera.

46. The apparatus according to claim 44 or 45, wherein the processing module is further configured to display the three-dimensional model of the target object, wherein the three-dimensional model is a model that is of the target object and that is generated based on the first target model of the target object or the second target model of the target object.

47. A model reconstruction apparatus, comprising:
an obtaining module, configured to obtain a current image, wherein the current image is any one of a plurality of frames of images of a target object that are obtained by a camera; and
a processing module, configured to: determine a pattern of the target object on the current image; determine, based on the pattern of the target object on the current image, whether a three-dimensional model of the target object is reconstructible; and display first prompt information on a display when determining that the three-dimensional model of the target object is reconstructible, wherein the first prompt information is used to indicate that the three-dimensional model of the target object is reconstructible.

48. The apparatus according to claim 47, wherein the first prompt information is used to prompt a user to move the camera, so that the target object is in a specified area of an image shot by the camera.

49. The method according to claim 47 or 48, wherein the processing module is further configured to display second prompt information on the display when determining that the three-dimensional model of the target object is non-reconstructible, wherein the second prompt information is used to indicate that the three-dimensional model of the target object is non-reconstructible.

50. The apparatus according to any one of claims 47 to 49, wherein the processing module is further configured to: display a selection control on the display; and receive a first operation instruction, wherein the first operation instruction is an instruction generated based on an operation performed by the user on the selection control in the display interface, and the first operation instruction is used to instruct to reconstruct or not to reconstruct the three-dimensional model of the target object.

51. The apparatus according to any one of claims 47 to 50, wherein the processing module is specifically configured to: obtain, based on the current image, a pattern that is of at least one object and that is comprised in the current image; display a mark of the pattern of the at least one object on the display; receive a second operation instruction, wherein the second operation instruction is an instruction generated based on a selection operation performed on the mark, and the second operation instruction is used to indicate one pattern in the pattern of the at least one object; and determine, as the pattern of the target object according to the second operation instruction, the pattern that is of an object and that is selected by the user.

52. The apparatus according to any one of claims 47 to 51, wherein the obtaining module is further configured to obtain a first image when the three-dimensional model of the target object is reconstructible, wherein the first image is an image obtained later than the current image in the plurality of frames of images; and
the processing module is further configured to: obtain a pose of the first image based on the first image, wherein the pose of the first image is a pose that is of the target object and that exists when the first image is shot; obtain accuracy of the pose of the first image; obtain a corrected pose of the first image or a corrected pose of a second image when the accuracy does not satisfy an accuracy condition, wherein the second image is an image obtained later than the first image in the plurality of frames of images; and generate a first target model of the target object based on the corrected pose of the first image, or generate a second target model of the target object based on the corrected pose of the second image.

53. A terminal device, comprising:
one or more processors; and
a memory, configured to store one or more programs, wherein
when the one or more programs are executed by the one or more processors, the one or more processors are enabled to implement the method according to any one of claims 1 to 26.

54. A computer-readable storage medium, comprising a computer program, wherein when the computer program is executed on a computer, the computer is enabled to perform the method according to any one of claims 1 to 26.

55. A computer program, wherein when being executed by a computer, the computer program is used to perform the method according to any one of claims 1 to 26.
